# EUROPÄISCHE PATENTSCHRIFT

(11) **EP 3 574 366 B1**
(45) Veröffentlichungstag und Bekanntmachung des Hinweises auf die Patenterteilung: **02.09.2026**
(21) Anmeldenummer: 18702127.4
(22) Anmeldetag: 16.01.2018
(51) Int. Cl.: G02C 7/02, G02C 7/06

(54) **VERFAHREN ZUR BERÜCKSICHTIGUNG UNTERSCHIEDLICHER PRISMATISCHER KORREKTUREN IN DER FERNE UND DER NÄHE**
METHOD FOR TAKING INTO CONSIDERATION DIFFERENT LONG-DISTANCE AND SHORT-DISTANCE PRISMATIC CORRECTIONS
PROCÉDÉ DE PRISE EN COMPTE DE DIFFÉRENTES CORRECTIONS PRISMATIQUES EN CHAMP LOINTAIN ET EN CHAMP PROCHE

(30) Priorität: 27.01.2017 DE 102017000777
(43) Veröffentlichungstag der Anmeldung: 04.12.2019
(73) Patentinhaber: Rodenstock GmbH, 80687 München (DE)
(72) Erfinder: WELK, Andrea, 81547 München (DE); SEIDEMANN, Anne, 81375 München (DE); ALTHEIMER, Helmut, 87650 Baisweil-Lauchdorf (DE); BÉNARD, Yohann, 81541 München (DE); MUSCHIELOK, Adam, 81369 München (DE); ESSER, Gregor, 80686 München (DE); BECKEN, Wolfgang, 82061 Neuried (DE)
(74) Vertreter: Müller-Boré & Partner Patentanwälte PartG mbB
(86) Internationale Anmeldenummer: PCT/EP2018/050949
(87) Internationale Veröffentlichungsnummer: WO 2018/137962

(56) Entgegenhaltungen:
- EP-A1- 2 363 743
- DE-A1- 102006 030 204
- DE-A1- 102010 021 763
- US-A1- 2015 036 102

## Beschreibung

Die Erfindung betrifft ein Brillenglas sowie ein computerimplementiertes Verfahren und eine Vorrichtung zum Berechnen oder Optimieren eines Brillenglases, wobei das Brillenglas unterschiedliche prismatische Korrekturen für die Ferne und die Nähe realisieren kann.

Unterschiedliche prismatische Korrekturen für Ferne und Nähe können für unterschiedliche Anwendungen relevant sein. Spezielle Prismen in der Nähe finden zum Beispiel bei Störungen des binokularen Sehens Anwendung, wie z.B. Konvergenzinsuffizienz. Eine Konvergenzinsuffizienz ist eine sensorische und neuromuskuläre Störung, die eine Person daran hindert, ein Objekt in der Nähe richtig zu sehen.

Zudem gibt es bei Brillen für die Korrektur einer Anisometropie, insbesondere bei Mehrstärken- und progressiven Gläsern, das Problem, dass ein Höhenausgleichsprisma benötigt wird, um in den Nahdurchblickpunkten des Gläserpaares keine unerwünschte vertikale binokularprismatische Wirkung entstehen zu lassen. Bei einer Anisometropie handelt es sich nach DIN 5340 um eine ungleiche Fernpunktrefraktion beider Augen. Hat ein presbyoper Brillenträger rechts und links die gleiche Fernteilwirkung, so ergeben sich bei der Verwendung von Mehrstärkengläsern in der Nähe beiderseits gleiche Vertikalkomponenten der prismatischen Wirkung. Diese sind nicht störend für den Brillenträger, da die Differenz Null ist. Die prismatische Horizontalkomponente unterscheidet sich nicht von der bei entsprechend zentrierten Brillengläsern für die Ferne und hat somit keinen störenden Einfluss. Liegt jedoch eine Anisometropie vor, so führt das für beide Augen zu unterschiedlichen prismatischen Wirkungen. Sobald die Vertikalkomponente der prismatischen Wirkungsdifferenz eine physiologisch verträgliche Grenze überschreitet, kommt es zu Problemen beim Binokularsehen in der Nähe, da die Blickbewegung in den Nahbezugspunkt nicht einfach wie bei Einstärkengläsern durch eine entsprechende Kopfbewegung ersetzt werden kann. Stattdessen muss wirklich eine Blicksenkung und somit ein dezentraler Blick durch das Brillenglas stattfinden, denn erst im Nahbezugspunkt hat das Brillenglas die erforderliche Nahwirkung.

Es gibt verschiedene herkömmliche Möglichkeiten, unterschiedliche prismatische Korrekturen für die Ferne und die Nähe zu realisieren. Eine Möglichkeit ist die Anfertigung von zwei getrennten Brillen für Ferne und Nähe. Eine andere Möglichkeit ist die Umsetzung mit einer Mehrstärkenbrille. Hier lässt sich ein unterschiedliches Prisma zwischen Ferne und Nähe nur durch einen Slab-Off-Schliff erreichen, d.h. auf dem mathematisch schwächeren Glas wird ein vertikales Höhenausgleichsprisma eingearbeitet. Dadurch kommt es zu einer sichtbaren Knicklinie und damit verbunden zu einem Bildsprung an der Trennlinie. Eine weitere Methode besteht darin, das Prisma kontinuierlich entlang der Hauptblicklinie zu variieren. Dadurch entstehen jedoch Bereiche mit störendem Astigmatismus im Glas. Ein progressives Vertikalprisma ist in JP 2000-199877 A beschrieben. Ein progressives Horizontalprisma ist in JP H11 95175 A, JP H11 295670 A, US 8042940 B2, US 8287124 B2 und EP 1590700 B1 beschrieben.

DE 10 2006 030 204 A1 beschreibt ein Verfahren zum Optimieren eines Brillenglases, bei dem die prismatischen Wirkungen in die Zielfunktion aufgenommen werden. EP 2 363 743 A1 beschreibt ein Gleitsichtglas mit mindestens einem Fernbereich und mindestens einem Nahbereich, die unterschiedliche fokussierende Wirkung aufweisen, wobei das Linsenelement eine vorbestimmte prismatische Wirkung aufweist. Ferner werden der Vertikalanteil und der Horizontalanteil der vorbestimmten prismatischen Wirkung an unterschiedlichen Stellen des Gleitsichtglases realisiert.

Eine Aufgabe der Erfindung ist es, ein Verfahren zur Berechnung und Optimierung von Brillengläsern anzugeben, bei dem es möglich ist, unterschiedliche prismatische Korrekturen zwischen Ferne und Nähe zu berücksichtigen und in gut verträglichen Brillengläsern zu realisieren. Ferner ist es eine Aufgabe der vorliegenden Erfindung, ein unterschiedliches Prisma für die Ferne und die Nähe im Brillenglas einzuführen und trotzdem den durch die Prismenänderung verursachten Astigmatismus gering zu halten. Eine weitere Aufgabe der vorliegenden Erfindung ist es, die durch Anisometropie verursachten prismatischen Differenzen zwischen den Brillengläsern eines Brillenglaspaars zu reduzieren.

Gemäß einem ersten Aspekt der Erfindung wird diese Aufgabe durch ein computerimplementiertes Verfahren zum Berechnen oder Optimieren eines Brillenglases mit den im Anspruch 1 angegebenen Merkmalen; ein Verfahren zum Berechnen oder Optimieren eines Brillenglaspaars mit den im Anspruch 8 angegebenen Merkmalen; eine Vorrichtung zum Berechnen oder Optimieren eines Brillenglases oder eines Brillenglaspaars mit den im Anspruch 9 angegebenen Merkmalen; ein Computerprogrammerzeugnis mit den im Anspruch 10 angegeben Merkmalen; ein Verfahren zum Herstellen eines Brillenglases oder eines Brillenglaspaars mit den im Anspruch 11 angegeben Merkmalen; eine Vorrichtung zum Herstellen eines Brillenglases oder eines Brillenglaspaars mit den im Anspruch 12 angegebenen Merkmalen sowie ein Brillenglas mit den im Anspruch 13 und 14 angegebenen Merkmalen gelöst. Bevorzugte Ausführungsformen sind Gegenstand der abhängigen Ansprüche.

Wie eingangs beschrieben können unterschiedliche prismatische Korrekturen für Ferne und Nähe für unterschiedliche Anwendungen relevant sein. Zum Beispiel gehört die Verordnung von Prismen Basis innen (d.h. von horizontalen Prismen) zu den gängigen Behandlungsmethoden bei Konvergenzinsuffizienz.

Ferner können unterschiedliche prismatische Korrekturen für Ferne und Nähe beim Vorliegen einer Anisometropie von Relevanz sein. Liegt eine Anisometropie vor, so führt das für beide Augen zu unterschiedlichen prismatischen Wirkungen im Nahbezugspunkt bzw. Nahdurchblickpunkt. Sobald die Vertikalkomponente der prismatischen Wirkungsdifferenz die physiologisch verträgliche Grenze überschreitet, kommt es zu Problemen beim Binokularsehen in der Nähe. Dies gilt insbesondere für progressive Brillengläser, da die Blickbewegung in den Nahbezugspunkt nicht einfach wie bei Einstärkengläsern durch eine entsprechende Kopfbewegung ersetzt werden kann, sondern wirklich eine Blicksenkung und somit ein dezentraler Blick durch das Brillenglas stattfinden muss, da das Brillenglas erst im Nahbezugspunkt die erforderliche Nahwirkung hat.

Die Berechnung der entstehenden prismatischen Belastung eines binokularen Systems Δ*P_{RL}* in cm/m kann in guter Näherung nach folgender Formel erfolgen: $Δ {Pr}_{RL} = d Δ {S}_{RL}^{′} ,$ wobei
d die lotrechte Entfernung der Nahdurchblickpunkte von den optischen Mittelpunkten der Grundgläser bzw. den Prismenbezugspunkten bei Gleitsichtgläsern in cm ist; und
$Δ {S}_{RL}^{′}$ die vertikale Brechwertdifferenz zwischen dem linken und dem rechten Brillenglas in dpt ist.

Gleichung (1) basiert auf der Anwendung der Prentice-Regel auf die Brechwertdifferenz in vertikaler Richtung.

Die Toleranzschwelle gegenüber der entstehenden vertikalen Prismendifferenz ist individuell verschieden. Allerdings ist die vertikale Fusionsfähigkeit bekanntermaßen gering. Im Lehrbuch von Diepes und Blendowske "Optik und Technik der Brille", Optische Fachveröffentlichung GmbH, Heidelberg, 2002 wird als Faustregel angegeben, dass ab einer Anisometropie von 1 dpt bzw. ab einer vertikalen Prismendifferenz von 1 cm/m - 1,5 cm/m Gegenmaßnahmen ergriffen werden sollten. Denn nur wenn sich bei der Abbildung eines Objektes die beiden Fixierlinien (zentralen Hauptstrahlen) durch das rechte und das linke Brillenglas im Objektpunkt schneiden, kann das Objekt binokular einfach gesehen werden. Bei Anisometropie nimmt die vertikale Prismendifferenz mit zunehmender Blicksenkung stetig zu und die augenseitigen Fixierlinien müssen deshalb immer mehr unterschiedlich ausgelenkt werden. Um die Fusionsmechanismen (binokulare motorische und sensorische Fusion) zu entlasten, muss der Verlauf der Vertikalprismen entlang der Hauptblicklinien der beiden Brillengläser stetig von oben nach unten derart abgeändert werden, dass die prismatische Differenz deutlich reduziert wird.

Dies ist nach dem Stand der Technik jedoch ohne Bild- und/oder Brechwertsprung nicht möglich. Bei Flächen mit kontinuierlichem Anstieg des Brechwertes zwischen dem Fernbezugspunkt B_{F} und dem Nahbezugspunkt B_{N} wird im Allgemeinen der Astigmatismus fest vorgegeben bzw. der astigmatische Fehler entlang der Hauptlinie klein gehalten. Durch diese Vorgabe sind die horizontalen und vertikalen Steigungen der Fläche (bzw. die Änderung der prismatischen Wirkung) entlang der Hauptlinie bestimmt. Somit ist auch das Horizontal- und/oder das Vertikalprisma ebenfalls bestimmt und kann nicht geändert werden.

Unter Berücksichtigung der Orientierung des Auges an verschiedenen Durchblickstellen ist es zwar möglich, unterschiedliche Verordnungen in der Ferne und Nähe zu verwirklichen (siehe z.B. DE 10 2008 057205 A1, DE 10 2011 009473 A1 und EP 2 356 507 B1), aber es ist nicht möglich, prismatische Imbalanzen bzw. prismatische Differenzen zu korrigieren.

Erfindungsgemäß ist jedoch erkannt worden, dass bei Abweichung von diesen Bedingungen, d.h. bei Abweichung der festen Vorgabe eines Brechwertverlaufs und/oder eines Astigmatismusverlaufs entlang der Hauptlinie, es möglich ist, einen variablen Verlauf der prismatischen Wirkung entlang der Hauptlinie zu erzielen. Damit kann z.B. das Problem der überhöhten binokularen prismatischen Belastung in der Nähe beim Vorliegen einer Anisometropie gelöst werden. Ferner können gezielt horizontale Prismen in der Nähe eingeführt werden.

Gemäß Aspekte der Erfindung wird vorgeschlagen, gezielt ein solches kontinuierlich änderndes horizontales und/oder vertikales Prisma entlang der Hauptlinie einzuführen. Dies kann z.B. "direkt" durch eine Überlagerung mit einer Überlagerungsfläche oder "indirekt" durch eine Änderung des Brechwerts und/oder des Astigmatismus entlang der Hauptlinie, die mit einer Änderung des horizontalen und/oder vertikalen Prismas einhergeht, erfolgen.

Gemäß einem ersten Aspekt der Erfindung, wie in Anspruch 1 definiert, wird ein Prisma "indirekt" durch eine Änderung des Brechwerts und/oder des Astigmatismus eingeführt.

Das Verfahren kann ferner Vorgabe eines Nahbezugspunkts und gegebenenfalls eines Fernbezugspunkts des Brillenglases umfassen.

Bei einem Einstärkenbrillenglas kann der Soll-Brechwert im Nahbezugspunkt im Wesentlichen gleich dem durch Refraktionsbestimmung ermittelten Brechwert bzw. der sphärischen Wirkung oder Sphäre beim Sehen in die Ferne sein. Bei progressiven Brillengläsern kann der Soll-Brechwert im Nahbezugspunkt gleich der Summe des Soll-Brechwerts beim Sehen in die Ferne und der Addition sein. Der Soll-Astigmatismus im Nahbezugspunkt kann ebenfalls im Wesentlichen gleich dem durch Refraktionsbestimmung ermittelten Astigmatismus beim Sehen in die Ferne sein. Gegebenenfalls kann ein individueller Astigmatismus im Nahbezugspunkt berücksichtigt werden, welcher von dem Astigmatismus für das Sehen in die Ferne hinsichtlich Betrag und/oder Achse abweichen kann. Der Soll-Brechwert und/oder Soll-Astigmatismus können z.B. von einem Augenarzt, Augenoptiker oder automatisch ermittelt werden.

Gemäß dem ersten Aspekt der Erfindung wird/werden bewusst ein Brechwertfehler bzw. eine zusätzliche Addition und/oder ein astigmatischer Fehler im Nahbezugspunkt eingeführt, um ein zusätzliches vertikales und/oder horizontales Prisma im Nahbezugspunkt zu erzielen. Die Berechnung oder Optimierung des Brillenglases erfolgt dann anhand der geänderten Sollwerte im Nahbezugspunkt, vorzugsweise so dass diese Werte beim endgültigen Brillenglas erreicht werden.

Ein zusätzliches vertikales Prisma kann z.B. der zumindest teilweisen Korrektur einer Anisometropie eines Brillenträgers dienen. Beim Vorliegen einer Anisometropie entsteht im Nahbezugspunkt aufgrund der Differenz in der sphärischen und/oder astigmatischen Wirkung des rechten und des linken Brillenglases, eine vertikale Prismendifferenz, die störend für das Binokularsehen sein kann. In diesem Fall kann das Abändern des Soll-Brechwerts und/oder des Soll-Astigmatismus im Nahbezugspunkt derart erfolgen, dass die durch den Wirkungsunterschied der beiden Gläser der Brille bedingte Differenz der vertikalen Prismen in den Nahbezugspunkten der beiden Brillengläser (vertikale prismatische Differenz) zumindest teilweise kompensiert wird. Der prismatische Korrekturwert kann dementsprechend anhand der vertikalen prismatischen Differenz bestimmt werden. Ein zusätzliches horizontales Prisma kann z.B. der zumindest teilweisen Korrektur einer Konvergenzinsuffizienz dienen.

Das Berechnen oder Optimieren des Brillenglases kann ein Berechnen oder Optimieren einer der beiden Flächen des Brillenglases umfassen. Die andere Fläche (z.B. die Vorderfläche) kann eine vorgegebene oder vorgebbare Fläche sein, z.B. eine einfache sphärische oder rotationssymmetrische asphärische Fläche. Es ist jedoch möglich, beide Flächen des Brillenglases zu optimieren.

Das Optimieren oder Berechnen der zumindest einen Fläche des Brillenglases kann so erfolgen, dass der Verlauf des Brechwerts entlang der Hauptlinie der zu optimierenden Fläche stetig bzw. kontinuierlich ist. Dadurch kann ein Brillenglas erhalten werden, bei dem unterschiedliche horizontale und/oder vertikale Prismen im Fern- und Nahbezugspunkt mit glatten Flächen realisiert werden können, ohne dass ein Bildsprung entsteht.

Das Verfahren zum Berechnen oder Optimieren eines Brillenglases kann dementsprechend ein Ermitteln eines kontinuierlichen Verlaufs des Soll-Brechwerts und/oder des Soll-Astigmatismus entlang einer Hauptlinie des Brillenglases anhand des abgeänderten Brechwerts und/oder Soll-Astigmatismus im Nahbezugspunkt umfassen, wobei das Berechnen oder Optimieren des Brillenglases anhand des ermittelten Verlaufs des Soll-Brechwerts und/oder des Soll-Astigmatismus entlang der Hauptlinie erfolgt. Das Ermitteln eines kontinuierlichen Verlaufs des Soll-Brechwerts und/oder des Soll-Astigmatismus kann z.B. ein Abändern eines vorgegebenen Verlaufs (Anfangs- oder Startverlaufs) des Soll-Brechwerts und/oder des Soll-Astigmatismus entlang einer Hauptlinie des Brillenglases eines Brillenglases oder Brillenglasdesigns umfassen.

Der Soll-Brechwert kann sich z.B. linear als eine Funktion der Objektentfernung von oben nach unten ändern, wobei der abgeänderte Wert im Nahbezugspunkt berücksichtigt wird. Der Astigmatismus kann sich entsprechend ändern, insbesondere so, dass eine kontinuierliche Variation des horizontalen und/oder des vertikalen Prismas entlang der Hauptlinie erzielt werden kann.

Das Verfahren zum Berechnen oder Optimieren eines Brillenglases kann ferner ein Erfassen eines Soll-Brechwerts und/oder eines Soll-Astigmatismus in einem Fernbezugspunkt des Brillenglases umfassen, wobei der kontinuierlichen Verlauf des Soll-Brechwerts und/oder des Soll-Astigmatismus entlang der Hauptlinie des Brillenglases anhand des abgeänderten Brechwerts und/oder Soll-Astigmatismus im Nahbezugspunkt und des Soll-Brechwerts und/oder Soll-Astigmatismus im Fernbezugspunkt ermittelt wird.

Ist der Verlauf des Brechwerts und/oder des Astigmatismus entlang der Hauptlinie ermittelt, können dann die Seitenbereiche der Brillenglasfläche mit unterschiedlichen herkömmlichen Verfahren bzw. Ansätzen berechnet werden.

In der Regel erfolgt die Optimierung anhand der Minimierung einer Zielfunktion Z der Form *Z*(*Istwerte-Sollwerte*). Vorzugsweise wird zumindest eine Fläche des Brillenglases optimiert, wobei die Optimierung eine Minimierung einer Zielfunktion *Z = F*(*̅x̅*̅): $F \left(\vec{x}\right) = {\sum }_{i = 1}^{m} \left[{g}_{i , Δ R}{\left(Δ{R}_{i}-Δ{R}_{i , Soll}\right)}^{2}+{g}_{i , Ast}{\left({Ast}_{i}-{Ast}_{i , Soll}\right)}^{2}+…\right] .$

In der obigen Formel bezeichnen
- Δ*R_{i,Soll}*: den Sollwert des lokalen Refraktionsfehlers an der *i* -ten Bewertungsstelle;
- Δ*Rᵢ*: den tatsächlichen lokalen Refraktionsfehler an der *i*-ten Bewertungsstelle;
- *Ast_{i,Soll}*: den Sollwert der lokalen astigmatischen Abweichung bzw. des lokalen astigmatischen Fehlers an der *i* -ten Bewertungsstelle;
- *Astᵢ*: die tatsächliche lokale astigmatische Abweichung an der *i -* ten Bewertungsstelle;
- *g*_{*i*,Δ*R*}: die lokale Gewichtung des Refraktionsfehlers an der *i -* ten Bewertungsstelle;
- *g_{i,Ast}*: die lokale Gewichtung der astigmatischen Abweichung an der *i*-ten Bewertungsstelle.

Der Refraktionsfehler stellt die Differenz des Brechwerts des Brillenglases und des Soll-Brechwerts dar. Die astigmatische Abweichung bzw. der astigmatische Fehler stellt die Differenz des Astigmatismus des Brillenglases und des Soll-Astigmatismus dar. Vorzugsweise handelt es sich dabei um Werte in Gebrauchsstellung des Brillenglases, d.h. unter Berücksichtigung des Systems Brillenglas-Auge. In die Zielfunktion kann ferner eine Gewichtung der einzelnen Fehler (d.h. des Refraktionsfehlers und des astigmatischen Fehlers) eingehen. Insbesondere kann jeder der Fehler ortsabhängig über die Durchblickstelle *i* gewichtet werden.

Das Abändern der Anfangswerte für den Soll-Brechwert und/oder den Soll-Astigmatismus im Nahbezugspunkt kann die folgenden Schritte umfassen:
Berechnen eines zusätzlichen Brechwerts und/oder eines zusätzlichen Astigmatismus im Nahbezugspunkts des Brillenglases anhand des Korrekturwerts des vertikalen und/oder horizontalen Prismas im Nahbezugspunkt des Brillenglases; und
Addieren des zusätzlichen Brechwerts und/oder des zusätzlichen Astigmatismus zu dem Soll-Brechwert und/oder dem Soll-Astigmatismus im Nahbezugspunkt.

Das Bestimmen eines Korrekturwerts des vertikalen und/oder horizontalen Prismas im Nahbezugspunkt des Brillenglases kann ein Ermitteln eines physiologisch notwendigen Ausgleichs einer Differenz zwischen dem vertikalen Prisma im Nahbezugspunkt des Brillenglases und dem vertikalen Prisma im Nahbezugspunkt eines zweiten Brillenglases umfassen, wobei das zweite Brillenglas eine Wirkung aufweist, die sich von der Wirkung des Brillenglases unterscheidet. Das zweite Brillenglas kann sich insbesondere hinsichtlich des Brechwerts bzw. der sphärischen Wirkung und/oder des Astigmatismus (Betrag und/oder Achslage) vom dem zu optimierenden Brillenglas unterscheiden.

Das Ermitteln eines physiologisch notwendigen Ausgleichs kann z.B. ein Ermitteln eines maximalen Werts der tolerierbaren vertikalen Prismendifferenz im Nahbezugspunkt zwischen den beiden Brillengläsern umfassen (d.h. einer physiologisch noch verträglichen Prismendifferenz). Die vertikale Prismendifferenz kann dann beispielsweise nur soweit angeglichen werden, bis sie den vom Brillenträger als noch verträglich ermittelten Wert erreicht hat.

Die Korrektur der durch die unterschiedlichen Wirkungen der beiden Brillengläser bedingten Prismendifferenz im Nahbezugspunkt (insbesondere die vertikale Prismendifferenz) kann monokular oder binokular erfolgen. Anders ausgedrückt kann der Brechwert und/oder Astigmatismus nur eines der beiden Brillengläser (des zu optimierenden Brillenglases) oder der beiden Brillengläser abgeändert werden. Im letzteren Fall kann die zur zumindest teilweisen Korrektur der vertikalen und/oder der horizontalen Prismendifferenz erforderliche Änderung des Brechwerts und/oder des Astigmatismus im Nahbezugspunkt gleichmäßig (50:50) oder ungleichmäßig zwischen den beiden Brillengläsern aufgeteilt werden.

Das Ermitteln eines physiologisch notwendigen Ausgleichs kann durch ein Messen des physiologisch notwendigen Ausgleichs und/oder ein Berechnen des physiologisch notwendigen Ausgleichs (z.B. anhand zuvor ermittelten empirischen Werten) erfolgen.

So kann mit Hilfe der Prentice-Regel und gegebenenfalls unter Berücksichtigung der Geometrie der zu berechnenden oder optimierenden Fläche ausgerechnet werden, zu welcher Prismendifferenz eine Anisometropie für den Brillenglasträger beim Blick in die Nähe führt. Die ermittelte prismatische Differenz zwischen rechtem und linkem Auge kann in einer Messbrille mittels prismatischer Refraktionsgläser demonstriert werden. Somit kann geprüft werden, ob die komplette prismatische Differenz zwischen Rechts und Links vom Brillenträger als verträglich oder unverträglich empfunden wird. Wird die prismatische Differenz als unverträglich empfunden, kann das prismatische Refraktionsglas vom Wert her so lange reduziert werden, bis der Brillenträger es als verträglich empfindet. Somit kann ein konkreter Prismenwert ermittelt werden, welcher für den Brillenträger verträglich ist. Die prismatische Differenz zwischen rechtem und linkem Auge wird vorzugsweise nur soweit angleichen, bis sie den vom Brillenträger als verträglich angegebenen Wert erreicht hat. Dieser Wert kann den aus physiologischer Sicht notwendigen individuellen Prismenangleich darstellen.

Die Korrektursanpassung kann monokular oder binokular vorgenommen werden. Zudem kann die prismatische Differenz, wie oben beschrieben, alleine auf Kosten eines astigmatischen Fehlers oder nur auf Kosten eines Brechwertfehlers korrigiert werden. Auch eine ausgewogene Aufteilung zwischen Brechwert- und astigmatischem Fehler ist möglich.

Alternativ kann die nach der Prentice Regel ermittelte Prismendifferenz mit einer zuvor ermittelten maximal zulässigen Prismendifferenz verglichen werden. Wird diese überstiegen, ist eine Korrektur notwendig.

Der prismatische Korrekturwert kann ferner auf einen maximal zulässigen Wert beschränkt werden, um eine Balance zwischen dem Brechwert- und/oder astigmatischen Fehler zu erreichen.

Das Abändern des Soll-Brechwerts und/oder den Soll-Astigmatismus im Nahbezugspunkt kann:
- visusabhängig bzw. in Abhängigkeit der Sehschärfe und/oder
- in Abhängigkeit von den Aberrationen Höherer Ordnung und/oder
- in Abhängigkeit von dem Astigmatismus des Brillenträgers und/oder
- in Abhängigkeit vom dominanten Auge
erfolgen.

Die erfassten Werte für den Soll-Brechwert und/oder den Soll-Astigmatismus im Nahbezugspunkt können im Hinblick auf verschiedene Aspekte abgeändert werden. Es ist z.B. möglich, die Änderung des Soll-Brechwerts bzw. der Addition und/oder des Soll-Astigmatismus im Nahbezugspunkt abhängig von der Höhe (z.B. mittels Refraktionsbestimmung ermittelten) Astigmatismus und/oder der Achslage zu machen. So können eine zu große Änderung des Betrags des Soll-Astigmatismus und/oder der Achslage ausgeschlossen werden. Die Abänderung der Werte für den Soll-Brechwert und/oder den Soll-Astigmatismus kann ebenfalls in Abhängigkeit von den Aberrationen höherer Ordnung des Brillenträgers erfolgen. So ist es z.B. möglich, bei höherer sphärischer Aberration eher eine Änderung im Soll-Brechwert in Kauf zu nehmen und bei höherem Astigmatismus 2. Ordnung eher eine Änderung des Astigmatismus zu tolerieren. Ein weiteres Kriterium kann sein, welches das dominante Auge des Brillenträgers ist. Dieses Auge kann z.B. mit der besseren Korrektur, d.h. mit der geringeren Änderung von Soll-Brechwert und/oder Astigmatismus versehen werden.

Der Soll-Brechwert und/oder der Soll-Astigmatismus können so geändert werden, dass sich eine kontinuierliche Änderung des horizontalen und/oder des vertikalen Prismas entlang der Hauptlinie ergibt. Das Verfahren kann ferner ein Ermitteln eines kontinuierlichen Verlaufs des horizontalen und/oder vertikalen Prismas entlang einer Hauptlinie des Brillenglases umfassen, so dass sich der Wert des horizontalen und/oder vertikalen Prismas von einem vorgegeben Wert zum Wert im Nahbezugspunkt kontinuierlich ändert. Das Berechnen oder Optimieren des Brillenglases kann dann anhand des ermittelten Verlaufs des horizontalen und/oder vertikalen Prismas entlang der Hauptlinie erfolgen. Das Abändern des Brechwerts und/oder des Astigmatismus im Nahbezugspunkt und gegebenenfalls entlang der Hauptlinie und das Anpassen des vertikalen und/oder horizontalen Prismas können iterativ erfolgen.

Es hat sich ferner herausgestellt, dass durch ein Drehen eines Flächenstreifens entlang der Hauptlinie um die Vertikale bzw. durch ein Einrollen der Fläche bzw. des Flächenstreifens entlang der Hauptlinie beliebige Änderungen des Prismas in horizontaler und vertikaler Richtung in einfacher Weise erzielt werden können.

Das Ermitteln eines kontinuierlichen Verlaufs des horizontalen und/oder vertikalen Prismas kann die folgenden Schritte umfassen:
Ermitteln einer Überlagerungsfläche oder eines Überlagerungsflächenstreifens mit einer Hauptlinie, welche der Hauptlinie des Brillenglases entspricht, wobei die Überlagerungsfläche oder der Überlagerungsstreifen die kontinuierliche Änderung des horizontalen und/oder vertikalen Prismas entlang der Hauptlinie aufweist; und
Addieren der Pfeilhöhen der Überlagerungsfläche und der Vorder- oder Rückfläche des Brillenglases.

Die durch die Addition der Pfeilhöhen der Überlagerungsfläche oder Überlagerungsflächenstreifens und Rück- oder Vorderfläche des Brillenglases entstandene Fläche kann weiter (z.B. zusammen mit dem Brillenglas als Ganzes) optimiert werden.

Gemäß einem zweiten Aspekt der Erfindung, wie in Anspruch 5 oder 6 definiert, wird ein solches kontinuierlich änderndes horizontales und/oder vertikales Prisma "direkt" eingeführt, z.B. bei einem Einstärken- oder progressiven Brillenglas.

Das Bestimmen des Korrekturwerts und/oder das Berechnen oder Optimieren des Brillenglases kann bzw. können wie beim ersten Aspekt erfolgen.

Die Änderung der prismatischen Wirkung bzw. des vertikalen und/oder des horizontalen Prismas geht jedoch mit einer Änderung des Brechwerts und des Astigmatismus einher, wie nachfolgend gezeigt wird. Bei Beibehaltung der geforderten Brechwertänderung (Additionsverlauf) zwischen dem Fernbezugspunkt (auch als B_{F} bezeichnet) und dem Nahbezugspunkt (auch als B_{N} bezeichnet) gilt dann für den astigmatischen Fehler *A* näherungsweise der Ausdruck: $A \approx 2 \frac{Δ P}{l}$

In der Gleichung (3) bezeichnet:
- *l*: die Progressionslänge bzw. den Abstand zwischen dem Fern- und dem Nahbezugspunkt; und
- Δ*P*: die Änderung der prismatischen Wirkung.

Ähnliches gilt in Bezug auf den Brechwertfehler.

Das Verfahren zum Berechnen oder Optimieren eines Brillenglases kann dementsprechend eine Änderung des Brechwerts und/oder des Astigmatismus im Nahbezugspunkt und gegebenenfalls entlang der Hauptlinie umfassen, um den Brechwertfehler und/oder den astigmatischen Fehler zu reduzieren. Wie oben beschrieben können die Änderung des Brechwerts und/oder des Astigmatismus und die Änderung des vertikalen und/oder horizontalen Prismas iterativ erfolgen.

Die oben beschriebenen Verfahren zum Berechnen oder Optimieren eines Brillenglases gemäß dem ersten und dem zweiten Aspekt können sowohl für Einstärkenbrillengläser als auch für progressive Brillengläser angewendet werden. Vorzugsweise ist das zu optimierende Brillenglas ein progressives Brillenglas.

Gemäß einem dritten Aspekt der Erfindung, wie in Anspruch 8 definiert, wird ein Verfahren zum Berechnen oder Optimieren eines Brillenglaspaars zur Korrektur einer Anisometropie eines Brillenträgers vorgeschlagen.

Ein vierter Aspekt der Erfindung, wie in Anspruch 9 definiert, betrifft eine Vorrichtung zum Berechnen oder Optimieren eines Brillenglases oder eines Brillenglaspaars zum Zweck der Fertigung des berechneten oder optimierten Brillenglases oder Brillenglaspaars. Die Vorrichtung umfasst Erfassungsmittel zum Erfassen eines Soll-Brechwerts und/oder eines Soll-Astigmatismus in einem Nahbezugspunkt des Brillenglases oder der Brillengläser eines Brillenglaspaars, und eine Rechenvorrichtung, wobei die Rechenvorrichtung ausgelegt ist:
einen Korrekturwert des vertikalen und/oder horizontalen Prismas im Nahbezugspunkt des Brillenglases oder zumindest eines der Brillengläser des Brillenglaspaars zu bestimmen;
den Soll-Brechwert und/oder den Soll-Astigmatismus im Nahbezugspunkt des Brillenglases oder des zumindest einen Brillenglases oder des Brillenglaspaars anhand des zuvor bestimmten Korrekturwerts des vertikalen und/oder horizontalen Prismas abzuändern;
einen kontinuierlichen Verlauf des Soll-Brechwerts und/oder des Soll-Astigmatismus entlang der Hauptlinie des Brillenglases anhand des abgeänderten Brechwerts und/oder Soll-Astigmatismus im Nahbezugspunkt zu ermitteln;
zumindest eine Fläche des Brillenglases oder des zumindest einen der Brillengläser des Brillenglaspaars anhand des abgeänderten Soll-Brechwerts und/oder Soll-Astigmatismus im Nahbezugspunkt und des ermittelten Verlaufs des Soll-Brechwerts und/oder des Soll-Astigmatismus entlang der Hauptlinie zu berechnen oder optimieren.

Die Erfassungsmittel (z.B. graphische Benutzerschnittstellen, elektronischen Schnittstellen, etc.) können auch Bestandteil der Rechenvorrichtung sein. Die Rechenvorrichtung kann geeignet konfigurierte bzw. programmierte Computer, spezialisierter Hardware und/oder Computernetze bzw. Computersysteme etc. umfassen. Die Rechenvorrichtung kann mittels geeigneter Schnittstellen in Signalverbindung mit den Erfassungsmitteln und gegebenenfalls entsprechenden Speichern stehen und insbesondere die in dem Speicher gespeicherten Daten (wie z.B. Soll-Werte) auslesen und/oder modifizieren. Die Rechenvorrichtung kann ferner eine vorzugsweise interaktive grafische Benutzerschnittstelle (GUI) umfassen, welche es einem Benutzer ermöglicht, entsprechende Daten (wie z.B. Soll-Brechwert und/oder den Soll-Astigmatismus) einzugeben und/oder zu modifizieren. Alle Berechnungen erfolgen vorzugsweise in Echtzeit.

Ein fünfter Aspekt der Erfindung betrifft ein Computerprogrammerzeugnis, wie in Anspruch 10 definiert.

Ein sechster Aspekt der Erfindung, wie in Anspruch 11 definiert, betrifft ein Verfahren zum Herstellen eines Brillenglases umfassend:
Berechnen oder Optimieren eines Brillenglases nach einem Ausführungsbeispiel des Verfahrens zum Berechnen oder Optimieren eines Brillenglases gemäß dem ersten Aspekt der Erfindung oder Berechnen oder Optimieren eines Brillenglaspaars nach einem Ausführungsbeispiel des Verfahrens zum Berechnen oder Optimieren eines Brillenglaspaars gemäß dem dritten Aspekt der Erfindung;
Fertigen des so berechneten oder optimierten Brillenglases oder Brillenglaspaars.

Insbesondere umfasst das Berechnen oder Optimieren des Brillenglases ein Bereitstellen von Flächendaten des nach einem Beispiel des Verfahrens zum Berechnen oder Optimieren eines Brillenglases berechneten oder optimierten Brillenglases. Wie bereits oben beschrieben wurde kann eine der beiden Flächen des Brillenglases (z.B. die Vorderfläche) eine vorgegebene Fläche sein, z.B. eine sphärische oder rotationssymmetrische asphärische Fläche. Die andere Fläche (z.B. die Rückfläche) wird dann optimiert oder berechnet.

Gemäß einem siebten Aspekt der Erfindung, wie in Anspruch 12 definiert, wird eine Vorrichtung zum Herstellen eines Brillenglases vorgeschlagen. Die Vorrichtung umfasst:
Rechenvorrichtung, welche ausgelegt ist, das Brillenglas nach einem bevorzugten Ausführungsbeispiel des Verfahrens zum Berechnen oder Optimieren eines Brillenglases gemäß dem ersten Aspekt der Erfindung oder das Brillenglaspaar nach einem bevorzugten Ausführungsbeispiel des Verfahrens zum Berechnen oder Optimieren eines Brillenglaspaars gemäß dem dritten Aspekt der Erfindung zu berechnen oder zu optimieren;
Bearbeitungsmittel, welche ausgelegt sind, das Brillenglas oder das Brillenglaspaar fertig zu bearbeiten.

Insbesondere umfasst die Vorrichtung zum Herstellen eines Brillenglases Flächendatenbereitstellungsmittel, welche ausgelegt sind, Flächendaten des nach einem Beispiel des Verfahrens zum Berechnen oder Optimieren eines Brillenglases berechneten oder optimierten Brillenglases bereitzustellen.

Die Bearbeitungsmittel zum fertig Bearbeiten des Brillenglases können z.B. CNC gesteuerte Maschinen zur Direktbearbeitung eines Blanks nach den ermittelten Optimierungsvorgaben umfassen. Alternativ kann das Brillenglas mittels eines Gießverfahrens gefertigt werden. Vorzugsweise weist das fertig bearbeitete Brillenglas eine einfache sphärische oder rotationssymmetrisch asphärische Fläche und eine nach den erfindungsgemäß berechneten Designvorgaben sowie individuellen Parametern des Brillenträgers optimierte (z.B. asphärische oder progressive) Fläche auf. Vorzugsweise ist die einfache sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen.

Ebenfalls kann die Vorrichtung zum Herstellen eines progressiven Brillenglases ferner Erfassungsmittel zum Erfassen von individuellen Daten des Brillenträgers umfassen. Die Erfassungsmittel können insbesondere grafische Benutzerschnittstellen umfassen.

Ein achter Aspekt der Erfindung, wie in den Ansprüche 13 und 14 definiert, betrifft ein Brillenglas, das ausgelegt und eingerichtet ist, unterschiedliche prismatische Korrekturen in der Ferne und Nähe zu realisieren bzw. zu erzielen.

Üblicherweise werden Brillengläser so ausgelegt und eingerichtet, dass die von einer Verordnung vorgegebenen Werte für die sphärische Wirkung (Sphäre), den Astigmatismus (Betrag und Achslage) und gegebenenfalls die prismatische Wirkung (Prisma und Basis) in vorgegebenen Bezugs- bzw. Konstruktionspunkten erreicht werden. Bei progressiven Brillengläsern umfasst die Verordnung auch eine Addition, die in der Regel den Brechwertunterschied zwischen einem Fernbezugspunkt und einem Nahbezugspunkt entspricht.

Gemäß dem achten Aspekt wird vorgeschlagen, durch eine gezielte Abänderung der durch die Verordnung vorgegebenen Wirkung im Nahbereich, eine geänderte prismatische Wirkung zu erzeugen, um unterschiedliche prismatische Korrekturen in der Ferne und Nähe in einem Brillenglas mit glatten Oberflächen zu realisieren.

Ein beispielhaftes Brillenglas, das nicht zum Gegenstand der Erfindung gehört, weist einen Nahbezugspunkt auf, wobei der Astigmatismus (Betrag und/oder Achslage) und die vertikale und/oder horizontale prismatische Wirkung im Nahbezugspunkt jeweils um mindestens 0,5 dpt bzw. 0,5 cm/m von den Werten eines Vergleichsbrillenglases, das keine zusätzliche prismatische Korrektur im Nahbezugspunkt enthält, abweichen.

Das Brillenglas weist sowohl eine gewisse Prismendifferenz Ferne-Nähe als auch zusätzlich einen Unterschied zwischen dem Fern- und dem Nahastigmatismus. Die Prismendifferenz Ferne-Nähe kann z.B. ≥ 0,5 cm/m sein. Die Astigmatismusdifferenz Ferne-Nähe bzw. |Asti_{Ferne} - Asti_{Nähe}| kann ≥ 0,5 dpt sein.

Ein weiteres beispielhaftes Brillenglas gemäß dem achten Aspekt weist einen ersten Bezugspunkt und einen Nahbezugspunkt auf, wobei:
der Astigmatismus im Nahbezugspunkt um mindestens 0,5 dpt von dem Astigmatismus im ersten Bezugspunkt abweicht; und
die Differenz der vertikalen prismatischen Wirkung im ersten Bezugspunkt und der vertikalen prismatischen Wirkung im Nahbezugspunkt um mindestens 0,5 cm/m von einem Wert Δ*Pr*₉₀ abweicht; und/oder
die Differenz der horizontalen prismatischen Wirkung im ersten Bezugspunkt und der horizontalen prismatischen Wirkung im Nahbezugspunkt um mindestens 0,5 cm/m von einem Wert Δ*Pr*₀ abweicht, wobei: $Δ {Pr}_{90} = - 0 , 1 \left(-2,5+0,05{S}_{N 90}^{2}+\left({S}_{F 90}+0,8{Add}_{90}\right)\left({y}_{BN}-{y}_{BF}\right)+0,025{Add}_{90}\left(\begin{matrix}{y}_{BN}^{2} - \\ {y}_{NF}^{2}\end{matrix}\right)\right) ;$ und $Δ {Pr}_{0} = 0 , 05 \left({S}_{F 0}+{S}_{N 0}\right) \left({x}_{BN}-{x}_{BF}\right) ,$

In den Formeln (3a) und (3b) bezeichnet:
- *x_{BF}*: die horizontale Koordinate des ersten Bezugspunktes;
- *x_{BN}*: die horizontale Koordinate des Nahbezugspunktes;
- *y_{BF}*: die vertikale Koordinate des ersten Bezugspunktes;
- *y_{BN}*: die vertikale Koordinate des Nahbezugspunktes;
- *S*_{*F*90}: den Brechwert in vertikaler Richtung im ersten Bezugspunkt;
- *S*_{*N*90}: den Brechwert in vertikaler Richtung im Nahbezugspunkt;
- *Add*₉₀ = *S*_{*N*90} - *S*_{*F*90}: die vertikale Addition;
- *S*_{*F*0}: den Brechwert in horizontaler Richtung im ersten Bezugspunkt;
- *S*_{*N*0}: den Brechwert in horizontaler Richtung im Nahbezugspunkt; und
- *Add*₀ = *S*_{*N*0} *- S*_{*F*0}: die horizontale Addition.

Der erste Bezugspunkt ist der Fernbezugspunkt oder der Zentrierpunkt (das Zentrierkreuz) bzw. der Anpaßpunkt des Brillenglases.

Nach DIN EN ISO 13666 und DIN 58208 ist der Nahbezugspunkt der Punkt auf der Brillenglasfläche (z.B. der Vorderfläche oder der Rückfläche), in dem die dioptrische (sphärische und gegebenenfalls astigmatische) Wirkung für das Nahteil erreicht werden soll. Der Nahbezugspunkt stimmt vorzugsweise mit dem Durchblickpunkt für das Sehen in die Nähe (Nah-Durchblickpunkt) überein. Der Fernbezugspunkt ist der Punkt auf der Brillenglasfläche (z.B. der Vorderfläche oder der Rückfläche), in dem die dioptrische (sphärische und astigmatische) Wirkung für das Fernteil erreicht werden soll. Dieser Punkt stimmt vorzugsweise mit dem Durchblickpunkt für das Sehen in die Ferne (Fern-Durchblickpunkt) überein. Der Zentrierpunkt ist ein Punkt, mit dem der optische Mittelpunkt, Konstruktionsbezugspunkt oder Anpaß- bzw. Zentrierpunkt zusammenfallen soll, wenn kein verordnetes Prisma oder Dickenreduktionsprisma vorhanden ist oder wenn solche Prismen neutralisiert sind. Der Zentrierpunkt wird in der Regel mittels eines Kreuzes (Zentrierkreuz) gekennzeichnet und dient der Zentrierung des Brillenglases vor den Augen des Brillenträgers. Der Prismenbezugspunkt ist der Punkt auf der Brillenglasfläche (z.B. der Vorderfläche oder der Rückfläche), in dem die prismatische erreicht werden soll.

Die obigen Definitionen können entsprechend auch für Einstärkenbrillengläser angewandt werden, mit dem Unterschied, dass bei diesen Brillengläsern nominell keine Änderung des Brechwerts zwischen Fern- und Nahbezugspunkt erfolgt (*Add =* 0).

Die Bezugspunkte sind mittels nicht-permanenten Stempelmarkierungen gekennzeichnet. Alle Brillengläser weisen ferner zwei (permanente) Mikrogravuren bzw. Markierungen auf, anhand derer die Lage der übrigen Bezugspunkte auf dem Brillenglas eindeutig rekonstruiert werden können (auch bei nicht mehr vorhandenen Stempelmarkierungen). Die Positionen der Bezugspunkte können je nach Hersteller variieren. Der Fernbezugspunkt kann sich z.B. bei x=0 mm und y = 0 mm bis +10 mm befinden, der Nahbezugspunkt bei z.B. x = 0 mm bis 3 mm (nasal versetzt) und y = -10 mm bis -20 mm und der Zentrierpunkt bei z.B. x = 0 mm und y = 0 bis 4 mm befinden. Der Ursprung des Koordinatensystems ist ein Punkt, welcher mittig auf der die permanenten Markierungen verbindenden Gerade liegt. Die horizontale Richtung wird durch die die permanenten Markierungen verbindende Gerade vorgegeben, die vertikale Richtung ist senkrecht dazu. Andere Anordnungen der Bezugspunkte sind jedoch auch möglich, z.B. bei Brillengläsern für spezielle Anwendungen.

Ein weiteres beispielhaftes Brillenglas gemäß dem achten Aspekt weist einen ersten Bezugspunkt und einen Nahbezugspunkt sowie zwei permanente Markierungen (Mikrogravuren) auf, wobei:
der Astigmatismus im zweiten Bezugspunkt um mindestens 0,5 dpt von dem Astigmatismus im ersten Bezugspunkt abweicht; und
die Differenz der vertikalen prismatischen Wirkung im ersten Bezugspunkt und der vertikalen prismatischen Wirkung im Nahbezugspunkt um mindestens 0,5 cm/m von einem Wert Δ*Pr*₉₀ abweicht, und/oder
die Differenz der horizontalen prismatischen Wirkung im ersten Bezugspunkt und der horizontalen prismatischen Wirkung im Nahbezugspunkt um mindestens 0,5 cm/m von einem Wert Δ*Pr*₀ abweicht, wobei: $Δ {Pr}_{90} = 0 , 2 + 0 , 7008 {S}_{F} + 0 , 899 {S}_{N} - 0 , 008 {S}_{N}^{2} ,$ und $Δ {Pr}_{0} = - \frac{{S}_{F 0} + {S}_{N 0}}{8}$ und wobei:
   - *S*_{*F*90}: den Brechwert in vertikaler Richtung im ersten Bezugspunkt bezeichnet;
   - *S*_{*N*90}: den Brechwert in vertikaler Richtung im Nahbezugspunkt bezeichnet;
   - *S*_{*F*0}: den Brechwert in horizontaler Richtung im ersten Bezugspunkt bezeichnet; und
   - *S*_{*N*0}: den Brechwert in horizontaler Richtung im Nahbezugspunkt bezeichnet.

Die Formeln (3c) und (3d) gelten für den Fall, dass der erste Bezugspunkt in der Mitte zwischen den permanenten Markierungen liegt und der Nahbezugspunkt relativ dazu um 16 mm nach unten und 2,5 mm nach innen, d.h. nasal, versetzt ist, wobei das Koordinatensystem das oben beschriebene Koordinatensystem ist.

Ferner gelten die Formeln (3a) bis (3d) für eine Vielzahl von Einstärken- und progressiven Brillengläsern, vorzugsweise für Brillengläser im Brechwertbereich: $- 6 , 0 dpt \leq {S}_{F} \leq + 6 , 0 dpt und Add \leq 2 , 50 dpt ,$ wobei:
- *S_{F}*: die mittlere sphärische Wirkung im ersten Bezugspunkt (z.B. im Fernbezugspunkt) bezeichnet,
- *Add = S_{N} - S_{F}*: die Addition des Brillenglases bezeichnet; und
- *S_{N}*: die mittlere sphärische Wirkung im Nahbezugspunkt bezeichnet.

Ein nach dem oben beschriebenen Herstellungsverfahren hergestellten Brillenglas oder Brillenglaspaar oder ein Brillenglas nach einem der oben beschriebenen Aspekte der Erfindung kann in einer vorgegebenen durchschnittlichen oder individuellen Gebrauchsstellung des Brillenglases vor den Augen eines bestimmten Brillenträgers zur Korrektur einer Fehlsichtigkeit des Brillenträgers verwendet werden.

Weiteren Aufgaben, Merkmale und Vorteile der vorliegenden Erfindung werden offensichtlich aus einer detaillierten Beschreibung einer bevorzugten Ausführungsform der vorliegenden Erfindung mit Bezug auf die Zeichnungen.

Es zeigen:
**Fig. 1** eine Darstellung des Hauptnormalenschnitts und des Orthogonalschnitts in einem Punkt der Hauptlinie einer symmetrischen Fläche;
**Fig. 2** einen beispielhaften Verlauf der mittleren Krümmung *H* (rechts) und des Astigmatismus A (links) in einem Orthogonalschnitt als Funktion des Abstandes *β* von der Hauptlinie für einen Streifen 2. Ordnung mit einer Nabellinie und einer Krümmungszunahme;
**Fig. 3** einen beispielhaften Verlauf der mittleren Krümmung *H* (rechts) und des Astigmatismus A (links) in einem Orthogonalschnitt als Funktion des Abstandes *β* von der Hauptlinie für einen Streifen 2. Ordnung mit einer Nabellinie und einer Krümmungszunahme;
**Fig. 4** den Verlauf der mittleren Krümmung *H* (rechts) und des Astigmatismus *A* (links) in einem Orthogonalschnitt als Funktion des Abstandes *β* von der Hauptlinie für einen Streifen 2. Ordnung mit einer Nabellinie und einer Krümmungszunahme, wobei die Krümmung der Basislinie sehr groß ist (Basiskurve = 15 dpt);
**Fig. 5** den Verlauf der mittleren Krümmung *H* (rechts) und des Astigmatismus *A* (links) in einem Orthogonalschnitt als Funktion des Abstandes *β* von der Hauptlinie für einen Streifen 2. Ordnung mit einer Nabellinie und einer linearen Krümmungszunahme;
**Fig. 6** den Verlauf der mittleren Krümmung *H* (rechts) und des Astigmatismus *A* (links) in einem Orthogonalschnitt als Funktion des Abstandes *β* von der Hauptlinie eines Streifens höherer Ordnung mit einer Nabellinie und einer Krümmungszunahme;
**Fig. 7** den Verlauf der mittleren Krümmung *H* (rechts) und des Astigmatismus *A* (links) in einem Orthogonalschnitt als Funktion des Abstandes *β* von der Hauptlinie eines Streifens 2. Ordnung mit einer Krümmungszunahme und einer Hauptlinie, die keine Nabellinie ist;
**Fig. 8** den Verlauf der mittleren Krümmung *H* (rechts) und des Astigmatismus *A* (links) in einem Orthogonalschnitt als Funktion des Abstandes *β* von der Hauptlinie eines Streifens 2. Ordnung Ordnung mit einer Krümmungs- und Astigmatismuszunahme und einer Hauptlinie, die keine Nabellinie ist;
**Fig. 9** den Verlauf der mittleren Krümmung *H* (rechts) und des Astigmatismus *A* (links) in einem Orthogonalschnitt als Funktion des Abstandes *β* von der Hauptlinie bei einer linearen Zunahme der prismatischen Wirkung entlang der Hauptlinie;
**Fig.10** eine beispielhafte Drehung einer Fläche zum Erzeugen eines Horizontalprismas;
**Fig. 11a-11d** eine beispielhafte Umsetzung eines horizontalen Nahprismas von 1 cm/m (Fig. 11a und 11b) bzw. 2 cm/m (Fig. 11c und 11d) bei einem Einstärkenglas;
**Fig. 12a-12b** eine beispielhafte Umsetzung eines horizontalen Nahprismas von 2 cm/m bei einem progressiven Brillenglas;
**Fig. 12c** ein herkömmliches Vergleichsglas;
**Fig.13** eine beispielhafte Änderung der Steigung des Vertikalschnitts einer Überlagerungsfläche zum Erzeugen eines Vertikalprismas;
**Fig. 14a-14d** eine beispielhafte Umsetzung eines vertikalen Nahprismas von 0,75 cm/m (Fig. 14a und 14b) bzw. 1,75 cm/m (Fig. 14c und 14d) bei einem Einstärkenglas;
**Fig. 15a-15b** eine beispielhafte Umsetzung eines vertikalen Nahprismas von 1 cm/m bei einem progressiven Brillenglas;
**Fig. 15c** die Verteilung des vertikalen Prismas in Gebrauchsstellung eines Vergleichsglases ohne Nahprisma;
**Fig. 16** mögliche Fehlerkombinationen im Nahbereich bei gegebener vertikaler Brechwertänderung;
**Fig. 17** eine beispielhafte Umsetzung eines Vertikalprismas von 0,75 cm/m bei einem Einstärkenbrillenglas;
**Fig. 18a-18c** die Astigmatismusverteilungen zweier progressiven Brillengläser (Fig. 18a und 18b) und die resultierende vertikale Prismendifferenz (Fig. 18c) bei einer Korrektur einer Anisometropie nach den Stand der Technik;
**Fig. 19a-19c** die Astigmatismusverteilungen (Fig. 19a und 19b) zweier progressiven Brillengläser und die resultierende vertikale Prismendifferenz (Fig. 19c) bei einer Korrektur einer Anisometropie nach einem Beispiel der Erfindung;
**Fig. 20** eine beispielhafte graphische Benutzerschnittstelle für ein Verfahren zum Berechnen eines vertikalen und/oder horizontalen Prismas bei einem Brillenglas;
**Fig. 21** eine beispielhafte graphische Benutzerschnittstelle für ein Verfahren zum Berechnen bzw. Optimieren der Korrekturwerte eines Brillenglaspaars zur Korrektur einer Anisometropie eines Brillenträgers.

In allen Beispielen bezieht sich das Koordinatensystem auf ein kartesisches Koordinatensystem, dessen Mittelpunkt mit dem geometrischen Mittelpunkt oder dem Prismenbezugspunkt des Brillenglases zusammenfällt. Die vertikale Richtung ist die auf den Erdmittelpunkt gerichtete Richtung bzw. die Richtung lotrecht (senkrecht) zur Erdoberfläche. Der Fernbezugspunkt der gezeigten Brillengläser befindet sich bei + 4 mm (= Zentrierpunkt), der Nahbezugspunkt bei -14 mm und der Prismenbezugspunkt bei 0 mm. Das Auge kann in einer durchschnittlichen Gebrauchsstellung oder in einer individuellen Gebrauchsstellung angeordnet sein. Die Gebrauchsstellung kann z.B. durch den Hornhautscheitelabstand, Vorneigung, Fassungsscheibenwinkel, Augendrehpunktabstand, Pupillendistanz, Objektabstandsmodell und/oder andere Parameter charakterisiert werden. Eine durchschnittliche Gebrauchsstellung ist z.B. in DIN 58 208 Teil 2 angegeben. Es ist selbstverständlich möglich, alle Modelle in anderen geeigneten Koordinatensystemen anzugeben und anschließend alle Berechnungen in dem gewählten Koordinatensystem durchzuführen. Ebenfalls sind auch andere Positionen der Bezugspunkte möglich.

Unter einer Hauptlinie (auch Hauptmeridian genannt) wird eine im Wesentlichen gerade oder gewunden verlaufende Linie verstanden, entlang welcher die gewünschte Änderung des Brechwerts des Brillenglases vom Fern- zum Nahteil erreicht wird. Die Hauptlinie 10 verläuft im Wesentlichen in der Mitte des Brillenglases von oben nach unten. Die Hauptlinie 10 stellt somit eine Konstruktionslinie im Koordinatensystem der zu optimierenden (objektseitigen oder augenseitigen) Fläche zur Beschreibung der Sollwerte des Brillenglases dar. Der Verlauf der Hauptlinie 10 des Brillenglases kann so gewählt werden, dass sie zumindest ungefähr der Hauptblicklinie folgt.

Unter einer Hauptblicklinie wird die Folge der Durchstoßpunkte der Hauptstrahlen durch die jeweilige Brillenglasfläche beim Blick auf eine Linie verstanden, welche in derjenigen senkrechten Ebene liegt, die den Abstand der beiden Augendrehpunkte halbiert (s.g. Zyklopenaugenebene). Bei der Brillenglasfläche kann es sich um die objekt- oder die augenseitige Fläche handeln. Die Lage der Hauptblicklinie wird insbesondere durch das gewählte Objektabstandmodell bestimmt.

Die Hauptkrümmungen des Brillenglases eines jeden Punktes der Hauptlinie 10 werden derart gewählt, dass die gewünschte Änderung des Brechwerts vom Fernteil zum Nahteil erreicht wird. Ausgehend von dieser Linie können dann die Seitenbereiche der Brillenglasfläche mit unterschiedlichen Verfahren bzw. Ansätzen berechnet werden. Die Hauptlinie 10 verbindet in der Regel den Fern- und Nahbezugspunkt eines Brillenglases.

Wie oben beschrieben ist der Nahbezugspunkt Punkt auf der Brillenglasfläche (z.B. der Vorderfläche oder der Rückfläche) in dem die dioptrische Wirkung für das Nahteil erreicht werden soll. Der Nahbezugspunkt stimmt vorzugsweise mit dem Durchblickpunkt für das Sehen in die Nähe (Nah-Durchblickpunkt) überein. Der Fernbezugspunkt ist der Punkt auf der Brillenglasfläche (z.B. der Vorderfläche oder der Rückfläche) in dem die dioptrische Wirkung für das Fernteil erreicht werden soll. Dieser Punkt stimmt vorzugsweise mit dem Durchblickpunkt für das Sehen in die Ferne (Fern-Durchblickpunkt) überein.

Die obigen Definitionen können entsprechend auch für Einstärkenbrillengläser angewandt werden, mit dem Unterschied, dass bei diesen Brillengläsern nominell keine Änderung des Brechwerts entlang der Hauptlinie 10 erfolgt.

Der Zusammenhang zwischen prismatischer Wirkung und Astigmatismus und Brechwert kann im Allgemeinen wie folgt beschrieben werden.

Ausgehend von einer Nabellinie, welche in einer Ebene liegt, die die Symmetrieebene der Fläche ist, hat Minkwitz in seiner Arbeit "Über den Flächenastigmatismus bei gewissen symmetrischen Asphären", Optica Acta, 10(3): 223-227 (1963) den folgenden Zusammenhang zwischen der Brechungszunahme ∂*K*/∂*s* entlang der Nabellinie und der Astigmatismuszunahme ∂*Ast*/∂*β* senkrecht zur Nabellinie hergeleitet: ${lim}_{β \to 0} \frac{\partial Ast}{\partial β} = 2 \frac{\partial K}{\partial s} ,$ wobei *s* die Bogenlänge der Kurve und *β* den Abstand senkrecht zur Kurve bezeichnet.

In weiteren Arbeiten wurde dieser Satz auch auf asymmetrische Flächen mit einer gewundenen Nabellinie erweitert. Aus dem Satz von Minkwitz wurde eine Näherung (siehe Gleichung 4b) abgeleitet, die den Zusammenhang zwischen dem Astigmatismus *A* sowie der Addition *Add* und der Progressionslänge *l* beschreibt: $\frac{A}{x} = 2 \frac{Add}{l}$

Diese Näherung hat eine große Verbreitung und Anwendung in der Optik gefunden.

Schon bei Minkwitz wurde empfohlen, von der Forderung abzugehen, dass die Hauptlinie eine Nabellinie sein soll. Wird vom Fall der Nabellinie abgewichen, so ergibt sich bereits aus Symmetriegründen, dass der lineare Term in Gleichung 4a nicht mehr 2 sondern gleich 0 sein muss. Der Astigmatismus steigt also senkrecht zur Hauptlinie nicht linear an. Dies beruht darauf, dass nur im Sonderfall des Nabelpunktes der lineare Term ungleich 0 sein kann und trotzdem die Symmetrieforderung eingehalten werden kann, da der Astigmatismus seine Richtung an der Hauptlinie um 90° (von 45° auf 135°) ändert.

Dass der Astigmatismus im Fall einer Nabellinie als Funktion der Richtung senkrecht zur Hauptlinie nicht differenzierbar ist (also der Graph eine "Spitze" aufweist), ist eine Folge der Definition des Astigmatismus als Betrag der Hauptkrümmungen (siehe Gleichung (10)). Die zugrundeliegenden Größen selbst, d.h. die Hauptkrümmungen *k*₁ und *k*₂ , sind normalerweise stetig differenzierbare Funktionen. Deswegen folgt im Fall der Abwesenheit einer Nabellinie aus der Symmetrieforderung direkt das Verschwinden des linearen Terms.

Das bedeutet allerdings nicht, dass bei Abwesenheit einer Nabellinie der Astigmatismus seitlich zur Hauptlinie nicht ansteigt. Vielmehr zeigt sich bei modernen Progressivgläsern, dass zwar der Satz von Minkwitz (siehe Gleichung 4a) bei Abweichen von der Nabellinie nicht mehr gültig ist, jedoch die Gleichung 4b auch dann noch näherungsweise zutrifft.

Nachfolgend werden Verallgemeinerungen des "Satzes von Minkwitz" für Flächen deren Hauptlinien nicht Nichtnabellinien sind, für unsymmetrische Flächen sowie die höheren Ableitungen von Astigmatismus und Brechwert vorgeschlagen.

### Verallgemeinerung des "Satzes von Minkwitz" durch Erweiterung auf die höheren Ableitungen von Astigmatismus und Brechwert im Fall von symmetrischen Flächen

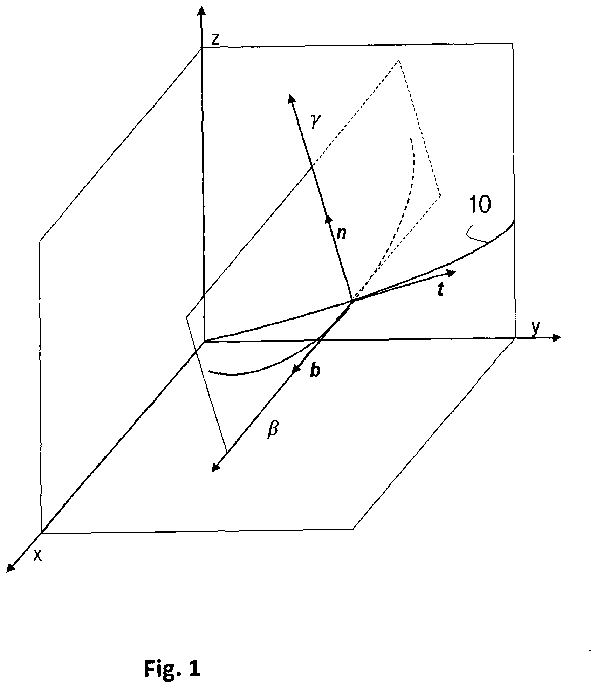

Gegeben sei die Hauptlinie ***r** = **r(s)*** als Funktion der Bogenlänge ***s***. Der Tangenteneinheitsvektor ***t**,* der Hauptnormaleneinheitsvektor ***n*** und der Binormaleneinheitsvektor ***b** =* ***t* x *n*** spannen in jedem Punkt der Kurve ein lokales kartesisches Koordinatensystem auf. In der Ebene, die der Hauptnormalen- und Tangenteneinheitsvektor ***t***, ***n*** aufspannen, liegt die Hauptlinie ***r = r(s)**,* während die Ebene, welche der Hauptnormalen- und Binormaleneinheitsvektor ***n**, **b*** aufspannen, senkrecht zur Hauptlinie steht. Da die Hauptlinie eine ebene Kurve ist, ist ***b*** konstant (siehe **Fig. 1**).

Eine symmetrische Fläche kann durch die Gleichung 5 beschrieben werden: $F \left(s, β\right) = r \left(s\right) + β b + γ \left(s, {β}^{2}\right) n \left(s\right)$

Bezeichnet *K=K(s)* die Krümmung der Hauptlinie, so gilt nach den Frenetschen Gleichungen: $\frac{\partial t}{\partial s} = K \left(s\right) n bzw . \frac{\partial n}{\partial s} = - K \left(s\right) t$

Damit die Hauptlinie eine Nabellinie darstellt, muss die Funktion *γ*(*s,β*²) folgende Form aufweisen: $γ \left(s, {β}^{2}\right) = \frac{K \left(s\right)}{2} {β}^{2} + {a}_{4} {β}^{4} + {a}_{6} {β}^{6} + ⋯$

Die Koeffizienten *a*₄ und *a*₆ hängen nicht von den Krümmungseigenschaften der Hauptlinie ab, sondern können frei zur Gestaltung der Peripherie der progressiven Fläche genutzt werden. Diese Koeffizienten entsprechen somit im übertragenen Sinne den B-Spline Koeffizienten bei der Optimierung einer progressiven Fläche.

Aus den ersten und zweiten partiellen Ableitungen der Fläche *F*(*s,β*) können die die Flächennormale ***N*** und die Koeffizienten der ersten Fundamentalform *E, F, G* und der zweiten Fundamentalform *L, M, N* berechnet werden.

Aus den Koeffizienten der Fundamentalformen können dann die gesuchten Größen Gauss'sche Krümmung *K* und die Mittlere Krümmung *H* und daraus wiederum der Astigmatismus *A* und die beiden Hauptkrümmungen *k₁*, *k₂* berechnet werden. Es gelten: $K \left(s, β\right) = {k}_{1} {k}_{2} = \frac{L N - {M}^{2}}{E G - {F}^{2}}$ $H \left(s, β\right) = \frac{{k}_{1} + {k}_{2}}{2} = \frac{E N + G L - 2 F M}{2 \left(E G-{F}^{2}\right)}$ $A \left(s, β\right) = {k}_{1} - {k}_{2} = 2 \sqrt{{H}^{2} - K}$ ${k}_{1} \left(s, β\right) = H + \sqrt{{H}^{2} - K}$ ${k}_{2} \left(s, β\right) = H - \sqrt{{H}^{2} - K}$

Für die Nabellinie ergeben sich dann auch die erwarteten Werte mit: $K = K {\left(s\right)}^{2} , H = K \left(s\right) , A = 0 , {k}_{1} = {k}_{2} = K \left(s\right) .$

Als nächster Schritt kann eine Reihenentwicklung der Mittleren Krümmung H und des Ausdruckes *H² - K* nach der orthogonalen Koordinate *β* durchgeführt werden. Es hat sich herausgestellt, dass der Ausdruck *H²- K* besser geeignet ist als direkt der Astigmatismus, da dadurch eine Singularität des Astigmatismus bei ${lim}_{β , A \left(0\right) \to 0}$ vermieden und den Ausdruck dann auch auf eine Quasi-Nabellinie erweitert werden kann.

Bei einem Streifen 2.Ordnung (*a*₄ = *a*₆ = 0 in Gleichung 7) ergibt sich dann für die mittlere Krümmung Hund den Astigmatismus A: $\begin{matrix}H \left(s, β\right) = K \left(s\right) \\ + \frac{1}{4} {β}^{2} \left(-3K{\left(s\right)}^{3}+K"\left(s\right)\right) \\ + \frac{1}{16} {β}^{4} K \left(s\right) \left(9K{\left(s\right)}^{4}-3K′{\left(s\right)}^{2}+K\left(s\right)K"\left(s\right)\right) \\ + \frac{1}{32} {β}^{6} \left(-37K{\left(s\right)}^{7}+19K{\left(s\right)}^{3}K′{\left(s\right)}^{2}+K"\left(s\right)\left(5K{\left(s\right)}^{4}-3K′{\left(s\right)}^{2}\right)\right)\end{matrix}$ $\begin{matrix}A \left(s, β\right) = 2 β \\ \sqrt{\begin{matrix}K ′ {\left(s\right)}^{2} + \frac{1}{16} {β}^{2} \\ \left(\begin{matrix}9 K {\left(s\right)}^{6} - 16 K {\left(s\right)}^{2} K ′ {\left(s\right)}^{2} + 6 K {\left(s\right)}^{3} K " \left(s\right) + K " {\left(s\right)}^{2} + \\ {β}^{2} \left(\begin{matrix}- 18 K {\left(s\right)}^{8} + 46 K {\left(s\right)}^{4} K ′ {\left(s\right)}^{2} - 8 K ′ {\left(s\right)}^{4} \\ - 3 K {\left(s\right)}^{5} K " \left(s\right) - 2 K \left(s\right) K ′ {\left(s\right)}^{2} K " \left(s\right) + K ′ {\left(s\right)}^{2} K " {\left(s\right)}^{2}\end{matrix}\right)\end{matrix}\right)\end{matrix}}\end{matrix}$

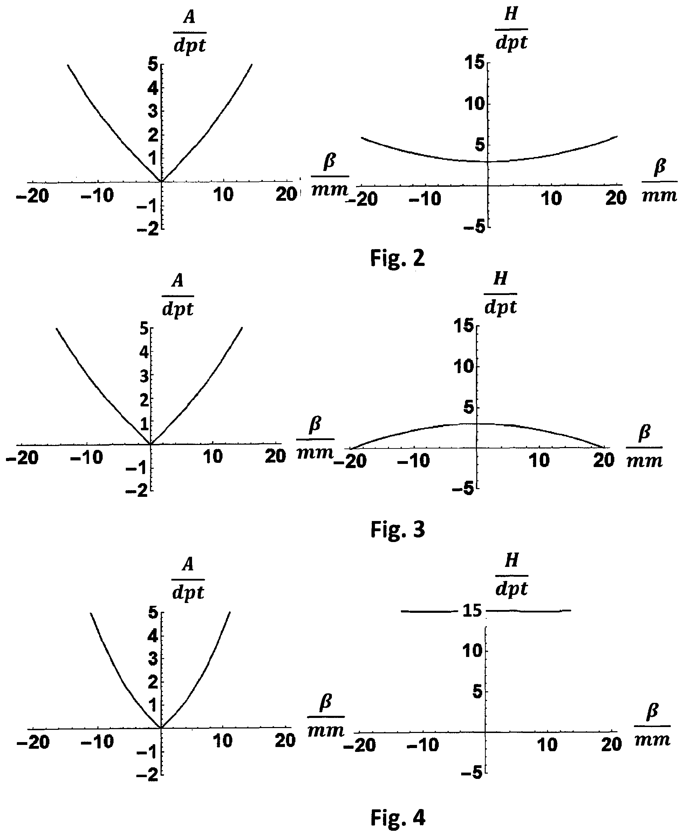

Entwickelt man Gleichung 15 nach der Variablen *β*, so ergibt sich für den linearen Term der aus dem Satz von Minkwitz bekannte Zusammenhang *A*(*s, β*) = 2*βK*' (*s*)*.* Man erkennt ferner, dass selbst bei einem Streifen 2. Ordnung die höheren Terme sowohl für den Brechwert und den Astigmatismus nicht gleich Null sind und somit z.B. der Astigmatismus nicht nur linear zunimmt (siehe **Fig. 2**). Ob der Brechwert zu oder abnimmt, hängt von der zweiten Ableitung der Krümmung der Hauptlinie ab. Ist diese positiv, nimmt der Brechwert zu und umgekehrt wenn diese negativ ist, nimmt der Brechwert ab (siehe **Fig. 3**). Beim Astigmatismus hingegen ist der quadratische Term immer positiv, unabhängig vom Vorzeichen der zweiten Ableitung der Krümmung der Hauptlinie. Dies bedeutet, dass der Brechwert an der Hauptlinie möglichst linear ansteigen sollte, da sonst der Astigmatismus senkrecht zur Hauptlinie, sowohl aufgrund der größeren maximalen Steigung des Brechwertes an der Hauptlinie als auch aufgrund der zweiten Ableitung des Brechwertes an der Hauptlinie, stärker zunimmt (siehe Fig. 2 und 3).

**Fig. 2** zeigt den Verlauf der mittleren Krümmung *H* (rechts) und des Astigmatismus *A* (rechts) in einem Orthogonalschnitt als Funktion des Abstandes *β* von der Hauptlinie für einen Streifen 2. Ordnung mit einer Nabellinie und einer Krümmungszunahme (sowohl positive Steigung als auch positive 2. Ableitung der Krümmung der Hauptlinie). **Fig. 3** zeigt den Verlauf der mittleren Krümmung *H* (rechts) und des Astigmatismus *A* (links) in einem Orthogonalschnitt als Funktion des Abstandes *β* von der Hauptlinie für einen Streifen 2. Ordnung mit einer Nabellinie und einer Krümmungszunahme (positive Steigung aber negative 2. Ableitung der Krümmung der Hauptlinie). Auf der Ordinate sind jeweils die mittlere Krümmung *H* in dpt und der Astigmatismus *A* in dpt aufgetragen. Auf die Abszisse ist der Abstand *β* von der Hauptlinie in mm angegeben.

Wählt man eine sehr große Krümmung an der Hauptlinie (Basiskurve), welche die Bedingung $K \left(s\right) = \sqrt[3]{\frac{K " \left(s\right)}{3}}$ erfüllt, kann das (wünschenswerte) Ziel erreicht werden, dass zumindest der quadratische Term in Gleichung 14 den Wert 0 annimmt und somit der Brechwert senkrecht zur Hauptlinie zumindest annähernd konstant ist (siehe **Fig. 4**).

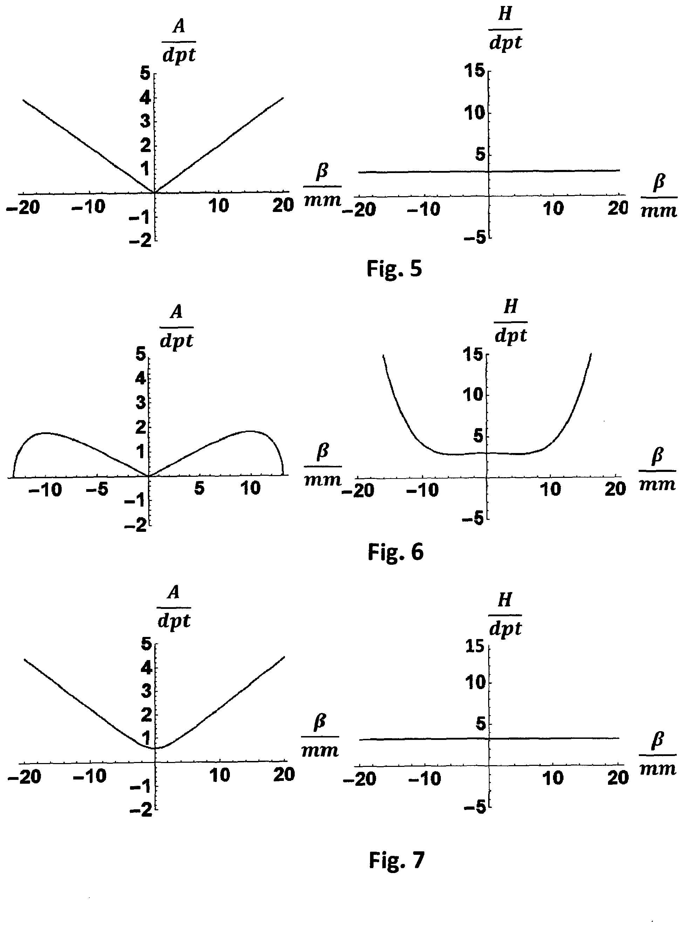

Wie bereits bekannt, ist es nicht möglich, eine progressive Fläche zu konstruieren, bei der der Brechwert in jedem Orthogonalschnitt konstant ist. Exakt kann dies nur für einen Schnitt erreicht werden, wenn die Bedingung *K*(*s*) = *K"* (*s*) *=* 0 erfüllt wird (siehe Gleichung 14), also die Krümmung der Hauptlinie den Wert Null annimmt und die Krümmung linear zunimmt. Dies gilt näherungsweise auch noch, wenn nur die Krümmung linear zunimmt und die Krümmung selber klein (< 5 dpt) ist (siehe **Fig. 5**). Wie aus Fig. 5 ersichtlich, ist der Brechwert senkrecht zur Hauptlinie bei einer linearen Krümmungszunahme (*K"*(*s*) *=* 0) nahezu konstant. Dies bedeutet, dass zwar erreicht werden kann, dass der Brechwert nahezu konstant in jedem Orthogonalschnitt ist, aber nur wenn die Krümmung linear zunimmt, also das Progressivglas keine stabilisierten Fern- und Nahbereiche aufweist.

Wird vom Streifen 2. Ordnung abgewichen, können die Koeffizienten *a*₄ und *a*₆, ähnlich wie die B-Spline Koeffizienten in der Optimierung einer Fläche, genutzt werden, um den peripheren Astigmatismus deutlich reduzieren (siehe **Fig. 6**).

**Fig. 6** zeigt den Verlauf der mittleren Krümmung *H* (rechts) und des Astigmatismus *A* (links) in einem Orthogonalschnitt als Funktion des Abstandes *β* von der Hauptlinie eines Streifens höherer Ordnung (d.h. > 2. Ordnung). Der Streifen weißt eine Nabellinie und eine Krümmungszunahme auf. Durch eine Variation der Koeffizienten *a*₄ und *a*₆ kann eine deutliche Reduktion des peripheren Astigmatismus erzielt werden.

Zusammengefasst ist bei Verwendung einer Nabellinie und einem Streifen 2. Ordnung der seitliche Anstieg des Astigmatismus im Wesentlichen durch den "Satz von Minkwitz" (dem linearen Term) bestimmt. Um Anstieg des Astigmatismus klein zu halten, können nur die Ableitungen der Krümmung der Hauptlinie, insbesondere die 1. Ableitung, klein gehalten werden. Der periphere Astigmatismus kann weitgehend unabhängig davon, durch eine Optimierung (z.B. der Koeffizienten *a*₄ und *a*₆) reduziert werden.

### Verallgemeinerung des "Satzes von Minkwitz" auf Nichtnabellinien bei symmetrischen Flächen

Wird von der Forderung einer Nabellinie abgewichen, so muss die Gleichung 7 um den Term Δ*K* erweitert werden: $γ \left(s, {β}^{2}\right) = \frac{K \left(s\right) + Δ K \left(s\right)}{2} {β}^{2} + {a}_{4} {β}^{4} + {a}_{6} {β}^{6} + . .$

Aus den ersten und zweiten partiellen Ableitungen der Fläche *F*(*s,β*) können die Flächennormale ***N*** und die Koeffizienten der ersten Fundamentalform *E, F, G* und der zweiten Fundamentalform *L, M, N* berechnet werden. Aus den Koeffizienten der Fundamentalformen können dann unter Verwendung der Gleichungen 8-12 die gesuchten Größen Gauss'sche Krümmung *K*, Mittlere Krümmung *H* und daraus wiederum der Astigmatismus *A* und die beiden Hauptkrümmungen *k₁, k₂* berechnet werden.

Es ergeben sich dann an der Hauptlinie die erwarteten Werte mit $\begin{matrix}K = K \left(s\right) \left(K\left(s\right)+ΔK\left(s\right)\right) , H = K \left(s\right) + \frac{Δ K \left(s\right)}{2} , A = Δ K \left(s\right) , \\ {k}_{1} = K \left(s\right) , {k}_{2} = K \left(s\right) + Δ K \left(s\right) .\end{matrix}$

Für den Sonderfall einer Nabellinie Δ*K*(*s*) = 0 ergeben sich die aus der Gleichung 13 bekannten Werte.

Auch hier führt kann eine Reihenentwicklung der mittleren Krümmung *H* und des Ausdruckes *H*² *- K* nach der orthogonalen Koordinate *β* ausgeführt werden. Es ergeben sich dann analog zu den Gleichungen 14 und 15 für die mittlere Krümmung *H* und den Astigmatismus *A*: $H \left(s, β\right) = K \left(s\right) + \frac{Δ K \left(s\right)}{2} + \frac{1}{4} {β}^{2} \left(-\left(K\left(s\right)+ΔK\left(s\right)\right)\left(\begin{matrix}3 Δ K {\left(s\right)}^{2} + 7 K \left(s\right) Δ K \left(s\right) + \\ 3 K {\left(s\right)}^{2}\end{matrix}\right)+ΔK"\left(s\right)+K"\left(s\right)\right) + \frac{1}{16} {β}^{4}$ $\begin{matrix}A \left(s, β\right) = 2 \\ \sqrt{\begin{matrix}\frac{1}{4} Δ K {\left(s\right)}^{2} + \frac{1}{4} {β}^{2} \\ \left(\begin{matrix}- 3 Δ K {\left(s\right)}^{4} - 8 Δ K {\left(s\right)}^{3} K \left(s\right) - 8 Δ K {\left(s\right)}^{2} K {\left(s\right)}^{2} + \\ 4 {\left(K′\left(s\right)+ΔK′\left(s\right)\right)}^{2} - Δ K \left(s\right) \left(3K{\left(s\right)}^{3}+K"\left(s\right)+ΔK"\left(s\right)\right)\end{matrix}\right) \\ + \frac{1}{16} {β}^{4} …\end{matrix}}\end{matrix}$

Für den Sonderfall einer Nabellinie, d.h. Δ*K*(*s*) = 0, gehen die Gleichungen 18 und 19 in die Gleichungen 14 und 15 über.

Aus der Gleichung 19 ergibt sich, dass der lineare Term des seitlichen Anstiegs des Astigmatismus gleich 0 ist und nicht mehr dem Satz von Minkwitz folgt. Nichtsdestotrotz steigt der Astigmatismus seitlich stark an, aber nun aufgrund des quadratischen Terms (siehe **Fig. 7**). **Fig. 7** zeigt den Verlauf der mittleren Krümmung *H* (rechts) und des Astigmatismus A (links) in einem Orthogonalschnitt als Funktion des Abstandes *β* von der Hauptlinie eines Streifens höherer Ordnung mit einer Krümmungszunahme und einer Hauptlinie, die keine Nabellinie ist. Wie aus Fig. 7 ersichtlich ist, folgt der lineare Term des seitlichen Anstieges des Astigmatismus nicht mehr dem Satz von Minkwitz, sondern ist gleich Null.

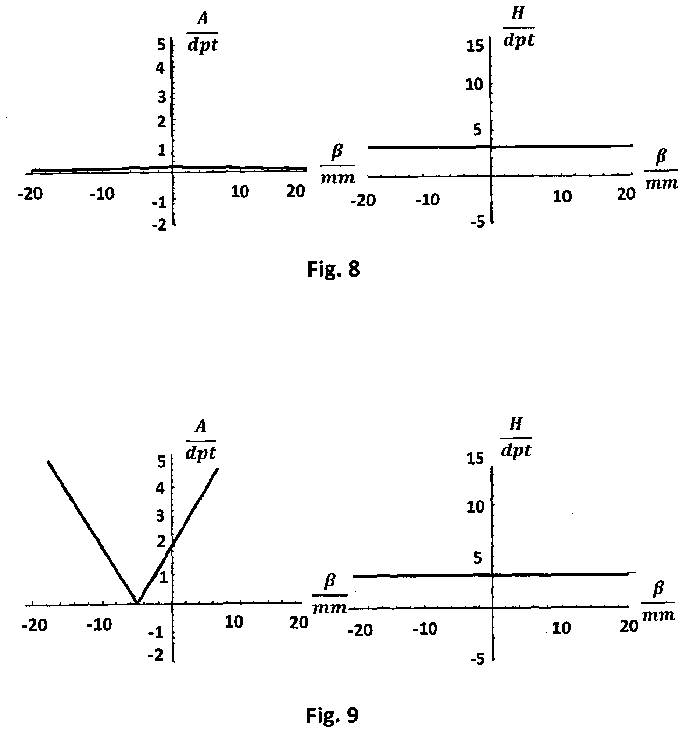

Ferner ergibt sich aus der Gleichung 19, dass es möglich ist, den dominierenden Faktor für den seitlichen Anstieg des Astigmatismus (*K'* (*s*) *+* Δ*K'* (*s*)) zu neutralisieren, indem die Zunahme des Astigmatismus Δ*K'* (*s*) entlang der Hauptlinie doppelt so groß ist wie die Krümmungszunahme *K'* (*s*) entlang der Hauptlinie selber. In diesem Fall ist der seitliche Anstieg näherungsweise gleich Null (siehe Fig. 8). Für den Fall, dass die Krümmung und der Astigmatismus an der Hauptlinie gleich Null ist (Δ*K*(*s*) *= K*(*s*) *=* 0) und die Zunahme des Astigmatismus entlang der Hauptlinie den entgegengesetzten Wert der Krümmungszunahme entlang der Hauptlinie aufweist, d.h. (Δ*K'* (*s*) = *-K'* (*s*) und *ΔK' '* (*s*) *=* - *K"* (*s*)), ist dies sogar exakt möglich.

**Fig. 8** zeigt den Verlauf der mittleren Krümmung *H* (rechts) und des Astigmatismus *A* (links) in einem Orthogonalschnitt als Funktion des Abstandes *β* von der Hauptlinie wenn die Zunahme des Astigmatismus Δ*K'* (*s*) entlang der Hauptlinie doppelt so groß ist wie die Krümmungszunahme *K'* (*s*) entlang der Hauptlinie selber. Wie aus Fig. 8 ersichtlich, ist der seitliche Anstieg des Astigmatismus näherungsweise Null auch für kleine Werte von Δ*K*(*s*) und *K*(*s*) wie bei progressiven Flächen üblich.

Eine solche Fläche (ohne Anstieg des seitlichen Astigmatismus) zeichnet sich dadurch aus, dass nur die Krümmung entlang der Hauptlinie zunimmt und die Krümmung senkrecht dazu konstant bleibt. Dies bedeutet wiederum, dass entlang der Hauptlinie der Astigmatismus doppelt so stark zunimmt wie der mittlere Brechwert (entlang der Hauptlinie). Es scheint also als würde eine allgemeinere Regel bestehen als der Satz von Minkwitz, welcher den Zusammenhang zwischen Krümmungszunahme entlang der Hauptlinie und Astigmatismus senkrecht zur Hauptlinie beschreibt. Beispielsweise repräsentiert eine Zylinderfläche, bei der jeder Horizontalschnitt eine Gerade (oder zumindest eine Kurve mit konstanter Krümmung) aufweist und sich der vertikale Schnitt spiralförmig einrollt, eine solche Fläche.

Zusammengefasst ist es bei Abweichen von der Forderung einer Nabellinie möglich, die Fläche so zu gestalten, dass der seitliche Anstieg des Astigmatismus deutlich reduziert werden kann. Allerdings muss hierfür in etwa gleicher Größenordnung der Astigmatismus entlang der Hauptlinie zunehmen. Ein aberrationsfreies Gleitsichtglas kann auch hiermit nicht realisiert werden. Jedoch ist aufgrund dieser Erkenntnis z.B. möglich, bei fernteilbetonten progressiven Brillengläsern, den peripheren Astigmatismus in präferierten Bereichen auf Kosten des Astigmatismus an der Hauptlinie in weniger wichtigen Bereichen zu reduzieren.

### Verallgemeinerung des "Satzes von Minkwitz" auf asymmetrische Flächen mit prismatischer Wirkung

Wird von der Symmetrie abgewichen und somit auch eine prismatische Wirkung zugelassen, so kann die Gleichung 16 folgendermaßen erweitert werden: $γ \left(s, {β}^{2}\right) = {a}_{1} \left(s\right) β + \frac{K \left(s\right) + Δ K \left(s\right)}{2} {β}^{2} + {a}_{3} \left(s\right) {β}^{3} + {a}_{4} \left(s\right) {β}^{4} + {a}_{5} \left(s\right) {β}^{5} + . .$

Das Verhältnis $\frac{{a}_{1} \left(s\right)}{\sqrt{1 + {a}_{1} {\left(s\right)}^{2}}}$ beschreibt das Horizontalprisma.

Aus den ersten und zweiten partiellen Ableitungen der Fläche *F*(*s*,*β*) können die Flächennormale ***N*** und die Koeffizienten der ersten Fundamentalform *E, F*, *G* und der zweiten Fundamentalform *L, M*, *N* berechnet werden. Aus den Koeffizienten der Fundamentalformen können dann unter Verwendung der Gleichungen 8-12 die gesuchten Größen Gauss'sche Krümmung *K,* mittlere Krümmung *H* und daraus wiederum der Astigmatismus *A* berechnet werden. Es ergeben sich dann an der Hauptlinie: $K = \frac{K \left(s\right) \left(K\left(s\right)+ΔK\left(s\right)\right) - {a}_{1}^{′} \left(s\right)}{{\left(1+{a}_{1}{\left(s\right)}^{2}\right)}^{2}}$ $H = \frac{K \left(s\right) \left(2+{a}_{1}{\left(s\right)}^{2}\right) + Δ K \left(s\right)}{2 {\left(1+{a}_{1}{\left(s\right)}^{2}\right)}^{\frac{3}{2}}}$ $A = \sqrt{\frac{{\left(ΔK\left(s\right)-{a}_{1}{\left(s\right)}^{2}K\left(s\right)\right)}^{2} + 4 \left(1+{a}_{1}{\left(s\right)}^{2}\right) {a}_{1}^{′} {\left(s\right)}^{2}}{{\left(1+{a}_{1}{\left(s\right)}^{2}\right)}^{3}}}$

Aus der Gleichung 23 ist ersichtlich, dass der Astigmatismus zwangsläufig größer als Null ist (*A* > 0), wenn die Ableitung des Horizontal-Prismas ${a}_{1}^{′} \left(s\right)$ ungleich Null ist. Dies bedeutet, dass wenn das Prisma sich ändert, weil z.B. unterschiedliche prismatische Wirkungen in der Ferne und Nähe realisieren werden sollen, sich automatisch ein Astigmatismus auf der Hauptlinie ergibt.

Betrachtet man den Sonderfall, dass nur ein vorgegebenes konstantes Prisma *a*₁(*s*) erzielt werden soll, so dass ${a}_{1}^{′} \left(s\right) = 0$ ist, kann durch geeignete Wahl der Krümmungsdifferenz (zwischen der Krümmung der Hauptlinie und orthogonal hierzu) Δ*K*(*s*)=*a*₁(*s*)²*K*(*s*) wieder ein Asigmatismus von 0 erreicht werden. In diesem Fall ist es möglich, das Prisma und den Astigmatismus (inklusive 0) unabhängig voneinander einzustellen.

Wie schon beschrieben, ergibt sich jedoch zwangsläufig ein Astigmatismus, wenn sich das Prisma ändern soll ( ${a}_{1}^{′} \left(s\right) \neq 0$). Minimal ist der astigmatische Fehler dann, wenn das Prisma selber *a*₁(*s*) = 0 und auch die Krümmungsdifferenz Δ*K*(*s*) = 0 ist. Dann ergibt sich für den Astigmatismus $A = 2 {a}_{1}^{′} \left(s\right)$

Für die Kreuzzylinderkomponenten (auch Jackson-Zylinder genannt) von Astigmatismus A ergibt sich dann ${J}_{0} = 0 , {J}_{45} = {a}_{1}^{′} \left(s\right)$

Dies bedeutet, dass die Achslage 45° oder 135° betragen muss. In diesen Fällen liegt die Hauptlinie genau in der Mitte zwischen den Hauptschnitten. Somit laufen die Kurvennormale (der Hauptlinie) und die Flächennormale der zylindrischen Fläche (entlang der Hauptlinie) maximal voneinander weg, so dass sich die größtmögliche prismatische Änderung ergibt.

Gleichung 25 ist auch dann noch eine gute Näherung, wenn das Prisma ungleich 0 ist, da *a*₁(*s*)² immer sehr klein ist im Vergleich zu den anderen Größen. So entspricht *a*₁(*s*)² = 0,01 einer prismatischen Wirkung von 10 cm/m).

Die Änderung des Prismas ${a}_{1}^{′} \left(s\right)$ hat keinen Einfluss auf den mittleren Brechwert *H* (siehe Gleichung 22).

### Abschätzung über die Größenordnung des Astigmatismus

Wird davon ausgegangen, dass sich die prismatische Wirkung linear über die Progressionslänge *l* um den Wert Δ*P* ändern soll, dann ergibt für den Astigmatismus *A* an der Hauptlinie $A \approx 2 \frac{Δ P}{l}$

Beträgt beispielsweise die Progressionslänge *l* = 10 *mm* und die prismatische Differenz $Δ P = 3 \frac{cm}{m}$, dann ergibt sich ein astigmatischer Fehler *A* von 6 dpt (siehe Fig. 9).

**Fig. 9** zeigt den Verlauf der mittleren Krümmung *H* (rechts) und des Astigmatismus *A* (links) in einem Orthogonalschnitt als Funktion des Abstandes *β* von der Hauptlinie bei einer linearen Zunahme der prismatischen Wirkung entlang der Hauptlinie. Ändert sich die prismatische Wirkung linear über die Progressionslänge *l* = 10 *mm* um den Wert ΔP = 1 cm/m, dann ergibt für den Astigmatismus an der Hauptlinie A = 2 dpt. Die Vorgabe der Änderung der prismatischen Wirkung hat keinen Einfluss auf den mittleren Brechwert.

Bei Vorgabe einer Änderung der prismatischen Wirkung, z.B. zwischen Fern- und Nahbereich, ergibt sich zwangsläufig ein astigmatischer Fehler der doppelt so groß ist wie die Änderung der prismatischen Wirkung.

### Einführen eines Horizontalprismas

Eine Variation des Horizontalprismas kann z.B. durch ein Drehen eines Flächenstreifens bzw. einer durch einen Flächenstreifen definierten Fläche um die Vertikale erzeugt werden. Insbesondere kann eine beliebige Variation des Horizontalprismas mittels Drehen einer einfachen Überlagerungsfläche auf der Rückfläche (oder/oder der Vorderfläche) eines Brillenglases erzeugt werden. Die Horizontalschnitte dieser Fläche sind Geraden, deren horizontale Steigung $\frac{dz}{dx} = tanα$ aus der Prismenvorgabe *pr_{N}* bzw. *pr* berechnet wird.

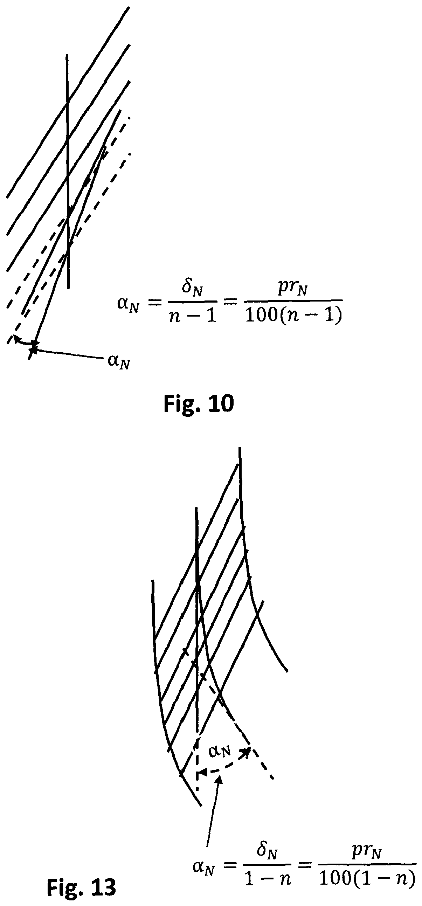

Ein y-abhängiges Horizontalprisma kann zum Beispiel mit einer Überlagerungsfläche mit Hilfe einer Drehung der Fläche um einen horizontalen Drehwinkel (Keilwinkel) *α = α*(*y*) erzeugt werden, wie in **Fig. 10** gezeigt. Dabei gelten: $pr = 100 tan δ \approx 100 δ ⇒ δ = \frac{pr}{100}$

In der Formel (27) bezeichnet:
- *pr*: die prismatische Wirkung, hier das Horizontalprisma
- *δ*: den Ablenkungswinkel, Winkel zwischen objekt- und augenseitigem Hauptstrahl
$α = \frac{δ}{n - 1} = \frac{pr}{100 \left(n-1\right)}$
- *α*: den brechenden Winkel, d.h. den Winkel zwischen den beiden Flächen
- *n*: die Brechzahl des Glasmaterials.

Bei einer geforderten Änderung des Horizontalprismas in der Nähe *pr_{N}* ergibt sich mit (28) der Drehwinkel in der Nähe zu ${α}_{N} = \frac{{pr}_{N}}{100 \left(n-1\right)}$.

Beschreibt man die Horizontalschnitte des sich drehenden Streifens mit einfachen Geraden, dann berechnet sich die Pfeilhöhe in einem Horizontalschnitt einfach mit der Geradengleichung: $z \left(x\right) = tan α x \approx α x$

Und die Überlagerungsfläche formuliert sich zu $z \left(y, x\right) = α \left(y\right) x = f \left(y\right) {α}_{N} x = f \left(y\right) \frac{{pr}_{N}}{100 \left(n-1\right) x}$

Ein einfacher Übergang des Drehwinkels *α(y)* von *α_{F}≈* 0 im Fernbereich zu *α_{N}* im Nahbereich lässt sich mittels eindimensionaler Funktionen mit zwei Asymptoten z.B. der *arctan*-Funktion realisieren: $f \left(y\right) = 0 , 5 - \frac{arctan \left(a\left(y-{y}_{0}\right)\right)}{π} ,$ wobei: $0 \leq f \left(y\right) \leq 1 ;$
y₀ das Zentrum bezeichnet, z.B. y₀ =0,5(y_{BF} + y_{BN}), wobei y_{BF} die vertikale Koordinate des Fernbezugspunkts und y_{BN} die vertikale Koordinate des Nahbezugspunkts bezeichnet;
*a* steuert, wie schnell der Übergang von *α_{F}* zu *α_{N}* erfolgt, wobei je kleiner *a* desto langsamer der Übergang.

Beispielhafte Werte sind y₀=- 5 und *a* = 0,2.

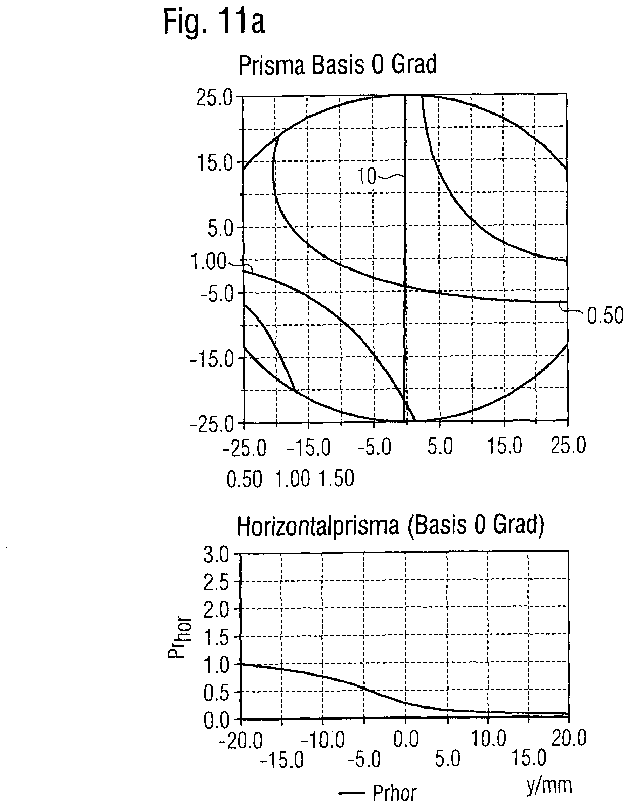

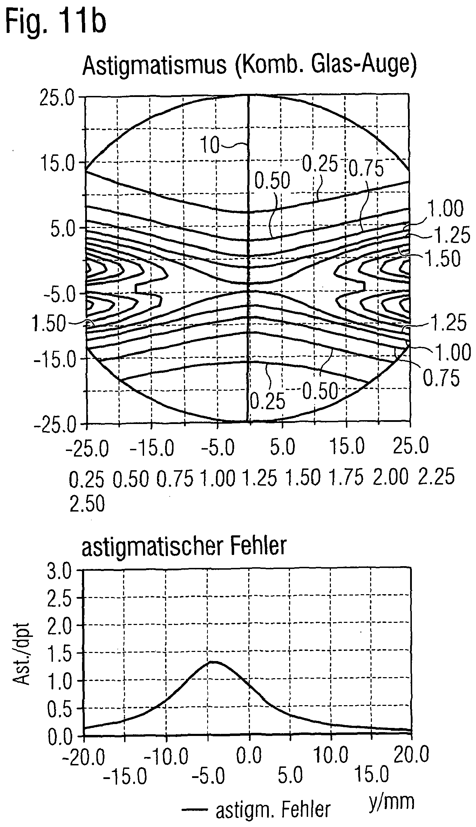

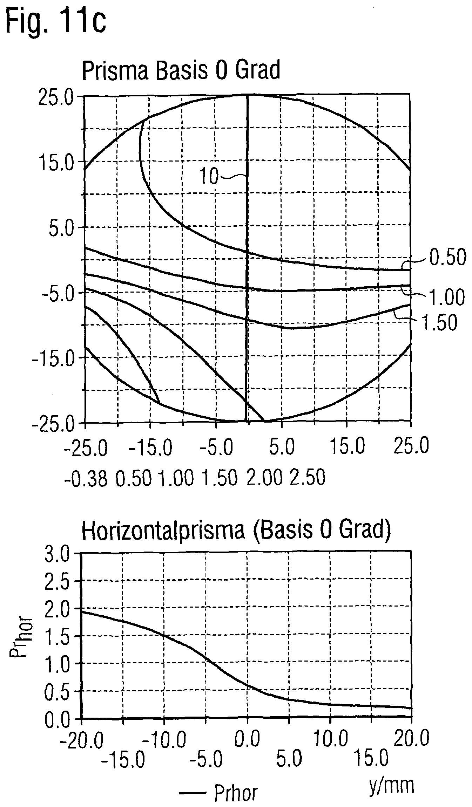

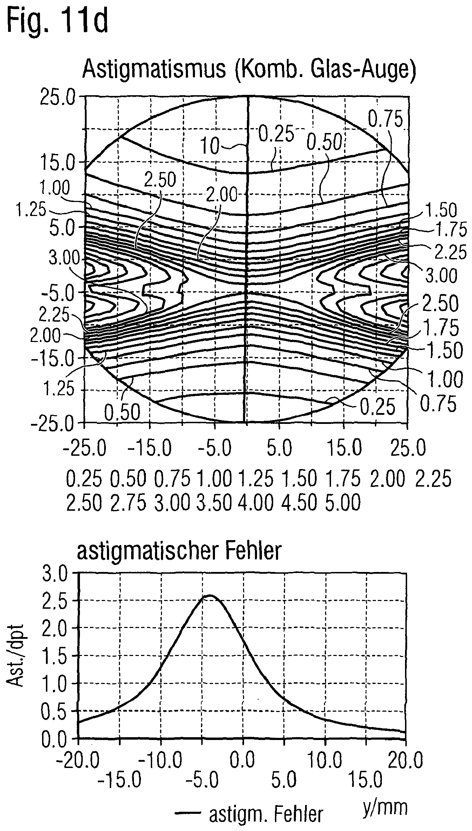

**Fig. 11a-11d** zeigen eine beispielhafte Umsetzung eines Nahprismas Basis innen bzw. Basis 0° (d.h. eines horizontalen Prismas) von 1 cm/m (Fig. 11a und 11b) oder 2 cm/m (Fig. 11c und 11d) bei einem Einstärkenglas. Fig. 11a und 11c zeigen jeweils die Isolinien des horizontalen Prismas (oben) und den Verlauf des horizontalen Prismas entlang der y-Achse (unten). Fig. 11b und 11d zeigen jeweils die Isolinien des Astigmatismus in Gebrauchsstellung des Brillenglases (oben) und den Verlauf des Astigmatismus in Gebrauchsstellung des Brillenglases entlang der y-Achse (unten). Es ergibt sich ein relativ langsamer Anstieg des Horizontalprismas entlang der y-Achse, der zu einem maximalen Astigmatismus von 1,25 dpt (Fig. 11a und 11b) oder 2,5 dpt (Fig. 11c und 11d)führt. Das horizontale Prisma wird, wie oben beschrieben, mit einer Überlagerungsfläche mit Hilfe einer Drehung der Fläche um einen horizontalen Drehwinkel (Keilwinkel), erzeugt.

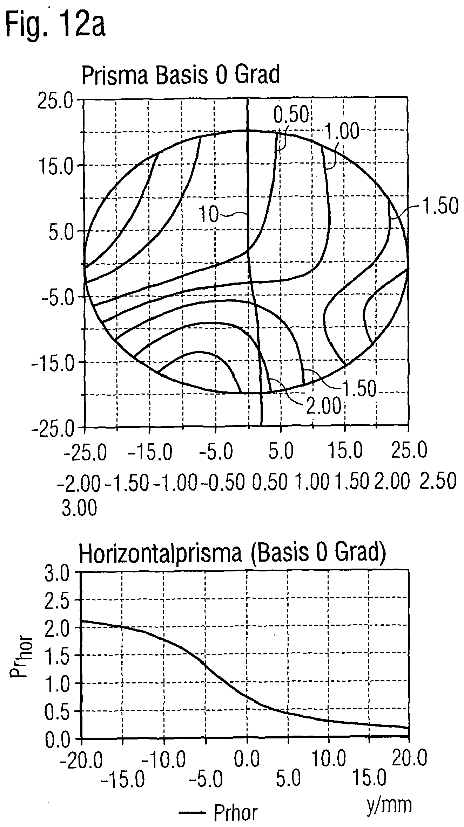

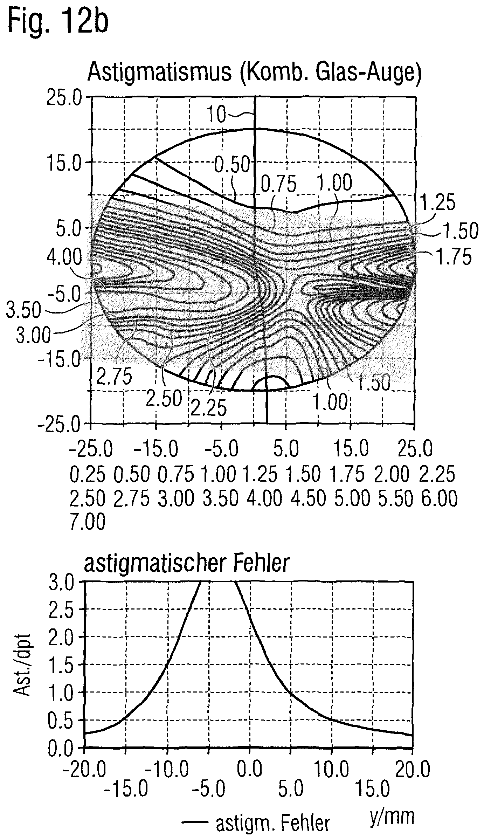

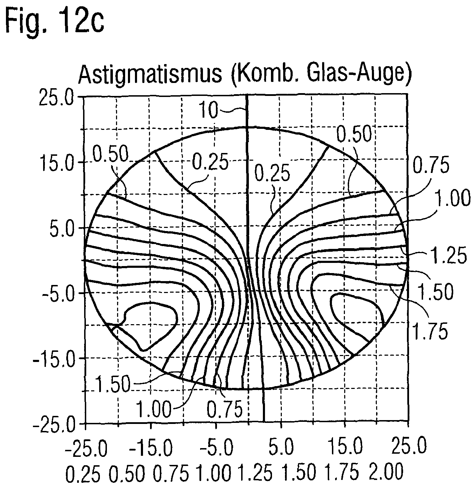

**Fig. 12a-12b** zeigen eine beispielhafte Umsetzung eines Nahprismas Basis innen von 2 cm/m bei einem Gleitsichtglas mit einer sphärischen Wirkung (Sphäre) im Fernbezugspunkt Sph = -1,0 dpt, einem Sollastigmatismus im Fernbezugspunkt Ast = 0,0 dpt und einer Addition Add = 2,0 dpt. Fig. 12a zeigt die Isolinien des Horizontalprismas bzw. des Prismas Basis 0° (oben) und den Verlauf des Horizontalprismas entlang der y-Achse (unten). Fig. 1b zeigt die Isolinien des Astigmatismus in Gebrauchsstellung des Brillenglases (oben) und der Verlauf des Astigmatismus in Gebrauchsstellung des Brillenglases entlang der y-Achse (unten). **Fig. 12c** zeigt die Isolinien des Astigmatismus in Gebrauchsstellung eines Vergleichsglases ohne Nahprisma. Das Vergleichsglas weist die gleichen Parameter (Sph, Add) wie das in Fig. 12a-12b gezeigte Brillenglas auf.

### Einführen eines Vertikalprismas

Ein Vertikalprisma kann durch ein Einrollen der Rück- und/oder Vorderfläche des Brillenglases erzeugt bzw. eingeführt werden. Ein y-abhängiges Vertikalprisma kann durch eine Überlagerungsfläche erzeugt werden, indem die Steigung des Vertikalschnittes abgeändert wird, wie in **Fig. 13** gezeigt. Bei dem in Fig. 13 gezeigten Beispiel bleibt der Horizontalschnitt unverändert. Es ist jedoch möglich, sowohl das Vertikal- als auch das Horizontalprisma bzw. sowohl den Vertikal- als auch den Horizontalschnitt zu verändern.

Die Änderung der Steigung des Vertikalschnittes und die Überlagerungsfunktion können folgendermaßen aus der Prismenvorgabe *pr_{N}* bzw. *pr* bestimmt werden: ${pr}_{N} = 100 tan {δ}_{N} \approx 100 {δ}_{N} ⇒ {δ}_{N} = \frac{{pr}_{N}}{100}$

Vorgegeben wird die Steigung des Vertikalschnittes: $Steigung - Ferne : {tanα}_{F} = 0$ $Steigung - Nähe : {tanα}_{N} = \frac{{pr}_{N}}{100 \left(1-n\right)}$ $tanα = \frac{dz}{dy} = \frac{b}{π} arctan \left(a\left(y-{y}_{0}\right)\right) - \frac{b}{2}$

Die Integration ergibt die Pfeilhöhe z(y): $z \left(y\right) = \frac{n}{2 π \left(y′\right)} \left(-2ay′ arctan\left(ay′\right)+ln\left(1+{a}^{2}y{′}^{2}\right)+aπy′\right)$
mit *y*' = *y* - *y*₀, wobei
y₀ und *a* vorgegeben werden und *b aus pr_{N}* gemäß Gleichungen 34 und 33b berechnet wird.

Somit kann auch eine beliebige Variation des Vertikalprismas mittels einer einfachen Überlagerungsfunktion auf der Rückfläche oder der Vorderfläche des Brillenglases erzeugt werden.

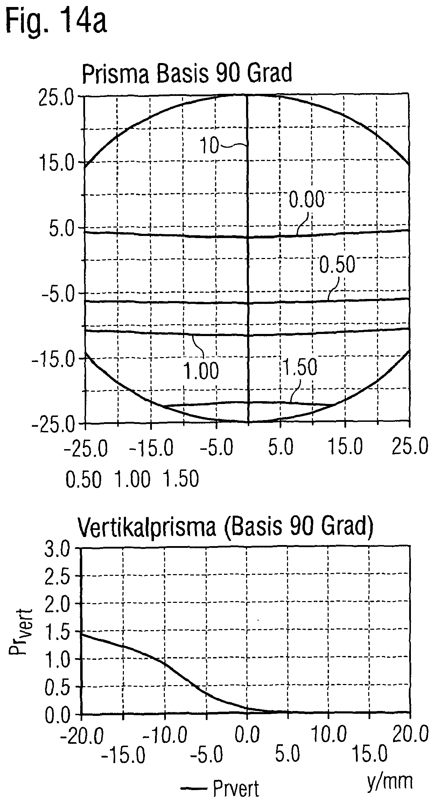

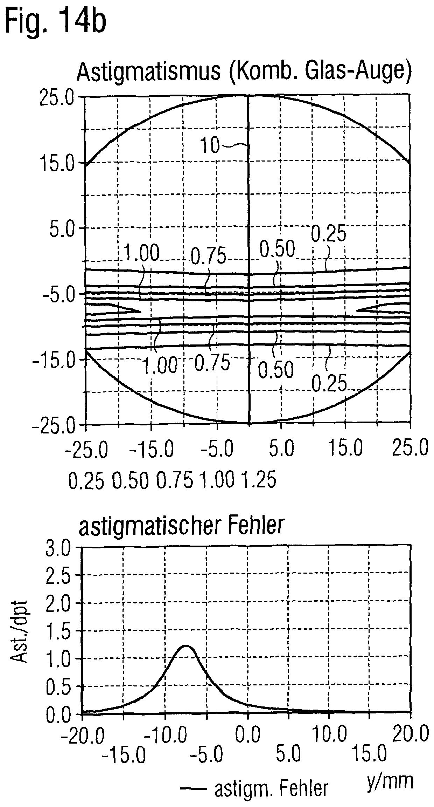

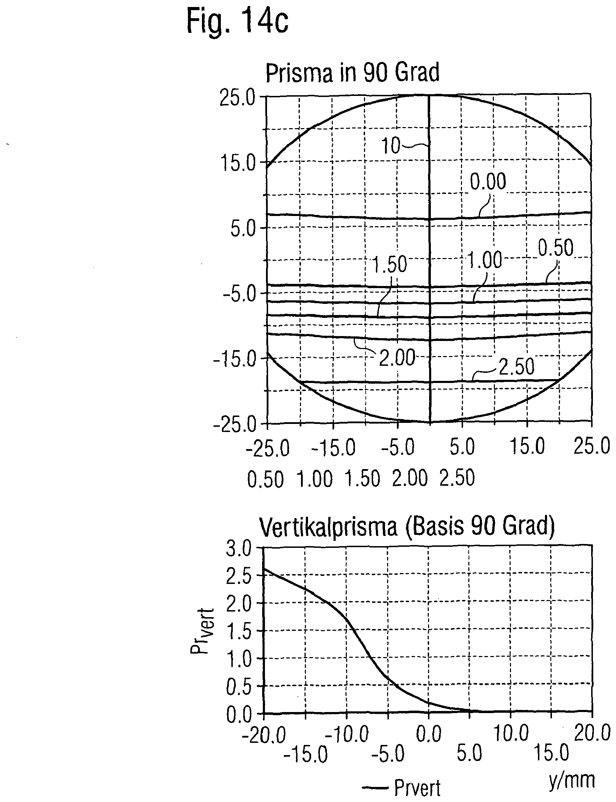

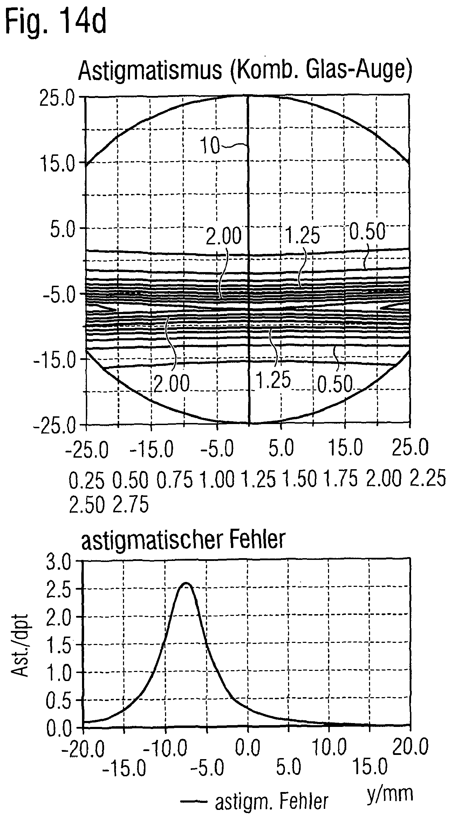

**Fig. 14a-14d** zeigen eine beispielhafte Umsetzung eines Nahprismas Basis 90° (d.h. eines vertikalen Prismas) von 0,75 cm/m (Fig. 14a und 14b) bzw. 1,75 cm/m (Fig. 14c und 14d) bei einem Einstärkenglas. Fig. 14a und 14c zeigen jeweils die Isolinien des vertikalen Prismas bzw. des Prismas Basis 90° (oben) und den Verlauf des vertikalen Prismas entlang der y-Achse (unten). Fig. 14b und 14d zeigen jeweils die Isolinien des Astigmatismus in Gebrauchsstellung des Brillenglases (oben) und den Verlauf des Astigmatismus in Gebrauchsstellung des Brillenglases entlang der y-Achse (unten). Durch das Einführen des vertikalen Prismas ergibt sich ein maximaler Astigmatismus Astₘₐₓ in der Mitte der Progressionszone von 1,2 dpt (Fig. 14b) oder 2,5 dpt (Fig. 14d) bei einem fehlerfreien Fern- und Nahbereich. Das Grundglas hat jeweils im Nahbezugspunkt B_{N} schon ein Vertikalprisma von 0,25 $\frac{cm}{m}$.

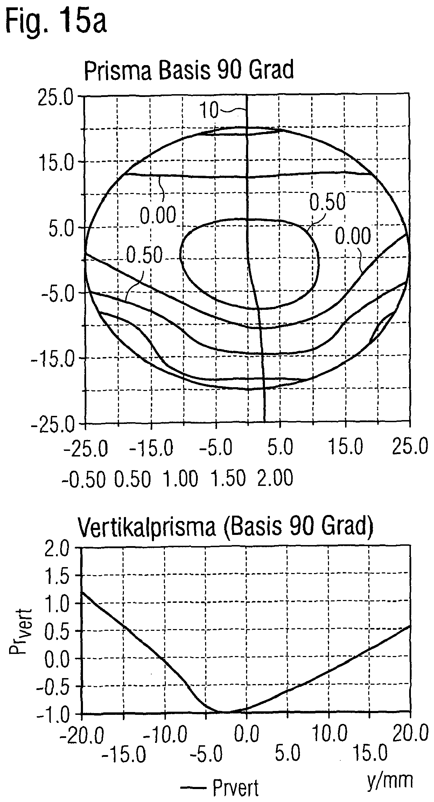

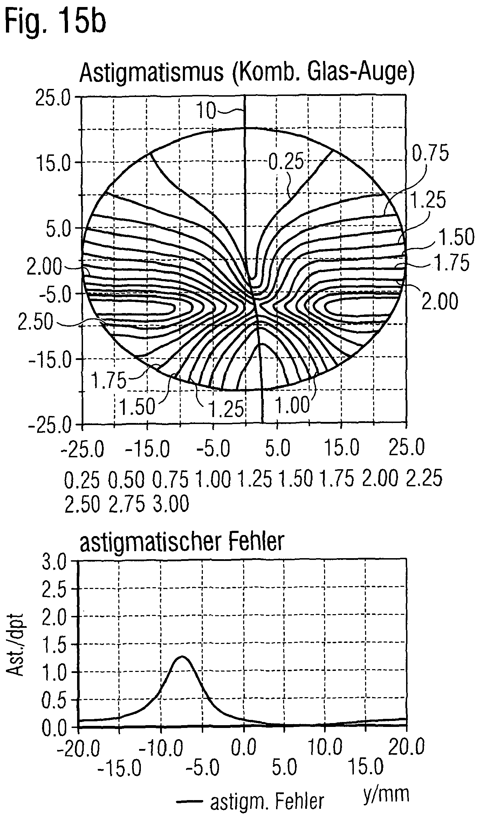

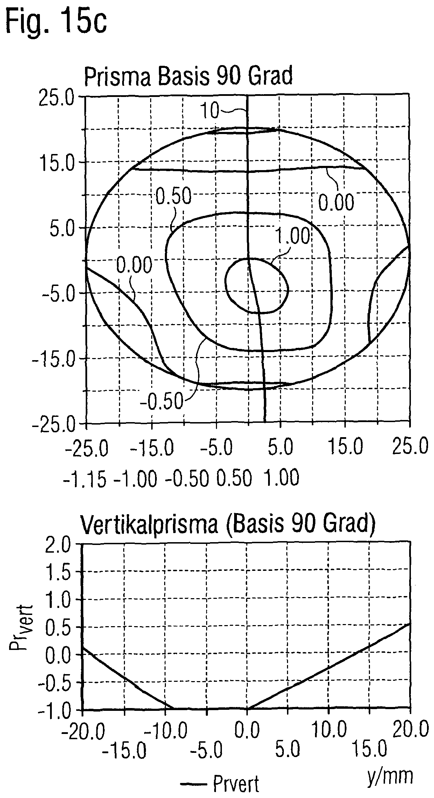

**Fig. 15a-15b** zeigen eine beispielhafte Umsetzung eines Nahprismas von 1 cm/m Basis 90° bei einem progressiven Brillenglas mit einer sphärischen Wirkung im Fernbezugspunkt Sph = 1,0 -dpt, Astigmatismus im Fernbezugspunkt Ast = 0,0 dpt und einer Addition Add = 2,0 dpt. Fig. 15a zeigt die Isolinien des Vertikalprismas bzw. des Prismas Basis 90° (oben) und den Verlauf des Vertikalprismas entlang der y-Achse (unten). Fig. 15b zeigt die Isolinien des Astigmatismus in Gebrauchsstellung des Brillenglases (oben) und der Verlauf des Astigmatismus in Gebrauchsstellung des Brillenglases entlang der y-Achse (unten). **Fig. 15c** zeigt die Isolinien des vertikalen Prismas eines Vergleichsglases ohne Nahprisma. Das Vergleichsglas weist die gleichen Parametern (Sph, Add) wie das in Fig. 15a-15b gezeigte Brillenglas.

Die vertikale Prismenänderung folgt in etwa der Brechwertzunahme. An der Stelle des größten Prismengradienten, also in der Mitte der Progressionszone, entsteht ein astigmatischer Fehler von 1,25 dpt. Der Nahbereich ist wieder fehlerfrei, da hier das zusätzliche Vertikalprisma konstant gehalten wird.

### Änderung des Vertikalprismas über einen großen Bereich

Soll der astigmatische Fehler klein gehalten werden, ist eine Umsetzung durch einen langsamen Anstieg des Vertikalprismas ohne Stabilisierung im Nahbereich möglich. Der Nahbereich ist dann allerdings nicht mehr fehlerfrei. Wird nur eine stetige Änderung der Vertikalkrümmung von dem Fernbezugspunkt B_{F} nach dem Nahbezugspunkt B_{N} aber keine Anpassung in horizontaler Richtung vorgenommen (siehe Fig. 13) erzeugt man einen zusätzlichen Astigmatismus, welcher der vertikalen Brechwertänderung entspricht (A=(n-1)*cᵥₑᵣ), und einen Brechwertfehler von 0,5*A aufweiset, da der horizontale Brechwert bzw. die horizontale Krümmung nicht angepasst wird. Soll der astigmatische Fehler im Nahbezugpsunkt B_{N} korrigiert werden, muss in horizontaler Richtung dieselbe Brechwertänderung eingeführt werden wie in der vertikalen Richtung. Dann ändert sich um diesen Betrag der Brechwert im Nahbezugspunkt, also die Addition. Soll hingegen die Addition konstant gehalten werden, dann muss in horizontaler Richtung die Brechwertänderung entgegengesetzt der vertikalen Brechwertänderung gewählt werden und es entsteht ein doppelt so hoher astigmatischer Fehler. Es ist möglich, die beiden Vorgehensweisen zu kombinieren.

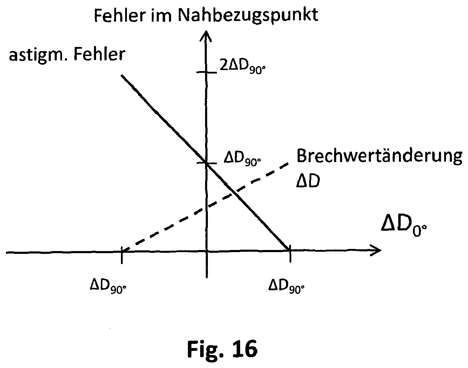

**Fig. 16** zeigt mögliche Fehlerkombinationen von Astigmatismus und Brechwert Δ D im Nahbereich bei gegebener vertikaler Brechwertänderung Δ D90 in Abhängigkeit von der Brechwertänderung in horizontaler Richtung Δ D0°. Die durchgezogene Linie beschreibt den astigmatischen Fehler und die gestrichelte Line die mittlere Brechwertänderung bzw. den Brechwertfehler. Wird keine horizontale Brechwertänderung eingeführt, also Δ D0° = 0 dpt gewählt (Werte an der y-Achse), so ist der eingeführte Astigmatismus gleich groß wie die vertikale Brechwertänderung Δ D90 und der Brechwertfehler halb so groß. Korrigiert man den Astigmatismus gänzlich durch Δ D0°= Δ D90°, so wird in gleichem Maße der Brechwert abgeändert (rechte Seite Fig. 16) und hält man den Brechwert konstant durch Δ D0°= - Δ D90° so muss der Astigmatismus den doppelten Wert der vertikalen Brechwertänderung annehmen Δ D90° (linke Seite der Fig. 16).

Als Faustformel für eine lange Progression (d.h. ca. 18 mm) gilt, dass die vertikale Brechwertänderung in etwa gleich der vertikalen Prismenänderung ist.

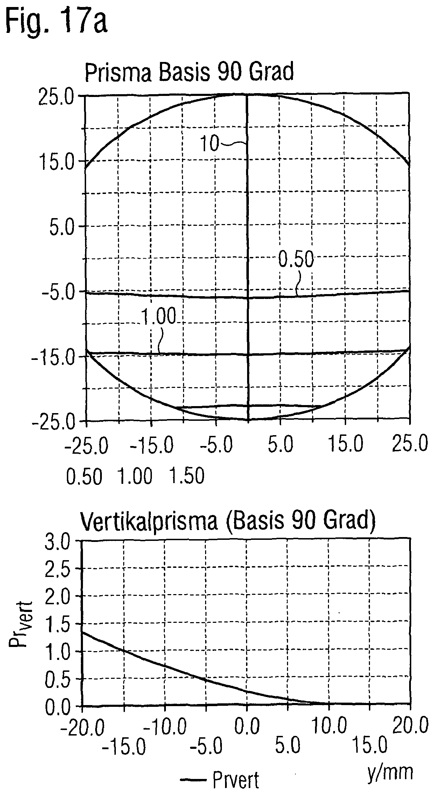

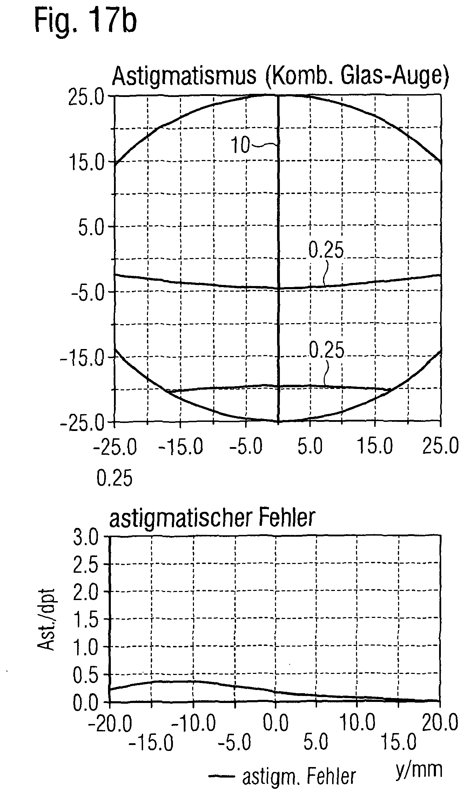

**Fig. 17a-17b** illustrieren eine beispielhafte Umsetzung eines vertikalen Prismas von 0,75 cm/m Basis 90° im Nahbezugspunkt B_{N} eines Einstärken-Planglases (d.h. Sph = 0,0 dpt, Ast = 0,0 dpt). Fig. 17a zeigt jeweils die Isolinien des eingeführten Vertikalprismas (oben) und den Verlauf des Vertikalprismas entlang der Vertikale bzw. der y-Achse (unten). Fig. 17b zeigt jeweils die Isolinien des Astigmatismus in Gebrauchsstellung des Brillenglases (oben) und den Verlauf des astigmatischen Fehlers entlang der Vertikale bzw. der y-Achse (unten). Bei der Umsetzung eines solchen kontinuierlichen Vertikalprismas müssen folgende Fehler im Nahbezugspunkt B_{N} in Kauf genommen werden (siehe Fig. 17b):
Astₘₐₓ= 0,37 dpt
Refraktionsfehler = 0,18 dpt

Der Nahteil ist somit nicht fehlerfrei.

Mit dem Einführen eines kontinuierlichen Vertikalprismas kann folglich eine Abschwächung der vertikalen Prismendifferenz bei Anisometropie mit glatten Flächen ohne Knick und Bildsprung umgesetzt werden. Es entstehen jedoch astigmatische Fehler und Refraktionssfehler.

Wie oben beschrieben kann ein horizontales und/oder vertikales Prisma auch über eine Veränderung des Soll-Brechwerts und/oder der Soll-Astigmatismus eingeführt werden. Ein vertikales Prisma im Nahbezugspunkt kann z.B. eingeführt werden, um die prismatische vertikale Differenz in den Nahbezugspunkten des linken und des rechten Brillenglases einer Brille zur Korrektur einer Anisometropie zumindest teilweise zu kompensieren. Ein beispielhaftes Verfahren zur Korrektur der vertikalen prismatischen Differenz in der Nähe zwischen einem rechten und einem linken Brillenglas eines Brillenglaspaars (z.B. beim Vorliegen einer Anisometropie) umfasst die folgenden Schritte:
- Ermitteln der vertikalen prismatischen Differenz im Nahbezugspunkt **Pr_{RL}**. Dies kann z.B. durch ein Messen der vertikalen prismatischen Differenz im Nahbezugspunkt **Pr_{RL}** oder durch ein Berechnen der vertikalen prismatischen Differenz **Pr_{RL}** im Nahbezugspunkt B_{N} (exakt oder näherungsweise) anhand der Verordnungswerte für Sphäre, Astigmatismus und gegebenenfalls Addition eines linken und eines rechten Brillenglases erfolgen;
- Vorgabe eines aus physiologischer Sicht notwendigen individuellen Prismenangleichs**ΔPr_{Korr}**
   ∘ $z . B . Δ {Pr}_{Korr} = MAX \left(0,0 cm/m,Δ{Pr}_{RL}-1,0 cm/m\right) ;$
- Bestimmen der prismatischen Korrekturwerte für das rechte und das linke Brillenglas **Pr_{KorrR}** und **Pr_{KorrL}** Die prismatischen Korrekturwerte können gleichmäßig oder unterschiedlich zwischen dem linken und dem rechten Glas aufgeteilt werden, z.B.:
   ∘ **Pr_{KorrR}** = **-Pr_{KorrL}** = **0,5 Pr_{Korr}**, d.h. gleichmäßige Verteilung zwischen dem rechten und dem linken Brillenglas; oder
   ∘ **Pr_{KorrR}** = 0,0 cm/m, **Pr_{KorrL}** = **ΔPr_{Korr}**, d.h. Angleich nur auf einer Seite); oder
   ∘ Ungleichmäßige Verteilung zwischen dem rechten und dem linken Brillenglas;
- Berechnen der zusätzlichen Nahrefraktionen für das rechte und/oder das linke Brillenglas, d.h. der erforderlichen Änderung des Soll-Brechwerts und/oder des Soll-Astigmatismus im Nahbezugspunkt (als Differenz der neuen und der vorgeschriebenen Addition bzw. Soll-Addition und/oder des neuen Astigmatismus und dem vorgeschriebenen Astigmatismus bzw. Soll-Astigmatismus);
- Addieren der zusätzlichen Nahrefraktion zu der ursprünglichen Nahrefraktion, vorzugsweise in der Powervektorschreibweise;
- Berechnen und Optimieren der Brillengläser, z.B. nach einem herkömmlichen Verfahren zum Berechnen eines Brillenglases.

Insbesondere kann ein Augenoptiker mit Hilfe der Prentice-Formel ausrechnen, zu welcher Prismendifferenz eine Anisometropie für den Gleitsichtglasträger beim Blick in die Nähe führt. Aufgrund dieser Berechnung kann er dem Brillenträger die prismatische Differenz zwischen rechtem und linkem Auge in der Messbrille mittels prismatischer Refraktionsgläser demonstrieren. Somit kann geprüft werden, ob die komplette prismatische Differenz zwischen Rechts und Links vom Brillenträger als verträglich oder unverträglich empfunden wird. Wird die prismatische Differenz als unverträglich empfunden, kann der Augenoptiker das prismatische Refraktionsglas vom Wert her so lange reduzieren, bis der Kunde es als verträglich empfindet.

Somit kann der Augenoptiker einen konkreten Prismenwert ermitteln, den der Brillenträger verträgt und somit auch in der Brille tragen kann. Er muss also die prismatische Differenz zwischen rechtem und linkem Auge nur soweit angleichen, bis sie den vom Brillenträger als verträglich angegebenen Wert erreicht hat. Dieser Wert kann den aus physiologischer Sicht notwendigen individuellen Prismenangleich darstellen.

Die Korrekturanpassung kann monokular oder binokular vorgenommen werden. Zudem kann die prismatische Differenz, wie oben beschrieben, alleine auf Kosten eines astigmatischen Fehlers oder nur auf Kosten eines Brechwertfehlers korrigiert werden. Auch eine ausgewogene Aufteilung zwischen Brechwert- und astigmatischem Fehler ist möglich.

Bei der Entscheidung, wie die Korrektur der vertikalen Prismendifferenz optimal umgesetzt werden kann, können zusätzlich folgende Aspekte (einzeln oder in Kombination) berücksichtigt werden:
1. Das Führungsauge (d.h. das dominante Auge) kann mit der besseren Korrektur versehen werden, d.h. mit der geringeren Änderung von den verordneten Brechwert und/oder Astigmatismus.
2. Die Anpassung der Korrektur kann visusabhängig erfolgen, d.h. das Auge mit dem besseren Visus bekommt die geringere Änderung. Zusätzlich kann bei hohem Visus eher einen Brechwertfehler in Kauf genommen werden. Anders ausgedrückt kann bei hohem Visus eher ein höherer Brechwertfehler als ein großer Astigmatismusfehler zugelassen werden.
3. Die Änderung kann abhängig von der Höhe des Astigmatismus und/oder der Achslage gestaltet werden, z.B. eine zu große Änderung der Achslage kann ausgeschlossen werden Die Änderung kann nach physiologischen Kriterien bestimmt werden. So wurde in einer physiologischen Studie festgestellt, dass das Vorschalten von Zylindergläsern ab Zyl 0,75 zu einem Visusabfall in der Nähe von 1 Stufe führt.
4. Die Korrektur kann ferner in Abhängigkeit von den Aberrationen höherer Ordnung des Brillenträgers erfolgen. So kann bei höherer sphärischer Aberration eher eine Änderung im Brechwert in Kauf genommen werden. Bei höherem Astigmatismus 2. Ordnung kann eher eine Änderung des Astigmatismus toleriert werden.

Das Berechnen der zusätzlichen Nahrefraktionen für das rechte und/oder das linke Brillenglas in Abhängigkeit von der prismatischen Korrekturwerte kann wie oben beschrieben unter Berücksichtigung des Zusammenhangs zwischen dem unerwünschten Astigmatismus, dem Brechwertfehler und der prismatische Wirkung erfolgen (siehe z.B. Fig. 16). Als Faustformel für lange Progression gilt: ${ΔD}_{90} \approx Δ {Pr}_{90} ,$ d.h. vertikale Brechwertänderung ≈ vertikale Prismenänderung.

Um durch Abändern der Rückfläche im Nahbezugspunkt eine Änderung des Vertikalprismas von ca. 0,5 cm/m zu erzeugen, kann der vertikale Brechwert D₉₀ z.B. um ca. 0,5 dpt abgeändert werden. Dies kann durch einen zusätzlichen Nahzylinder von 0,5 dpt Achse 0° erzielt werden. Die Änderung im Horizontalschnitt ΔD_{0°} bestimmt dann den Fehler im Brechwert und Astigmatismus.

Die nachfolgenden Tabellen 1A und 1B zeigen mögliche Kombinationen von Brechwertfehler und astigmatische Fehler im Nahbezugspunkt, um eine Reduktion der vertikalen Prismendifferenz im Nahbezugspunkt beim Vorliegen von Anisometropie zu erzielen:

**Tabelle 1A**

| **ΔΔD_{0°}** | **Ast** | **ΔΔAddition** | **Fehler in B_{N}** |
|---|---|---|---|
| ΔD_{90°} | 0,0 | ΔD_{90°} | nur Brechwert |
| 0,0 | ΔD_{90°} | $\frac{1}{2} {ΔD}_{90 °}$ | Brechwert und Astigmatismus |
| -ΔD_{90°} | 2ΔD_{90°} | 0,0 | nur Astigmatismus |

**Tabelle 1B**

| **ΔΔD_{0°}** | **Ast** | **ΔΔAddition** | **Fehler in B_{N}** |
|---|---|---|---|
| -0,50 dpt | 0,0 dpt | -0,50 dpt | nur Brechwert |
| 0,0 dpt | -0,50 dpt | -0,25 dpt | Brechwert und Astigmatismus |
| 0,50 dpt | -1,00 dpt | 0,0 dpt | nur Astigmatismus |

Nach dem Addieren der zusätzlichen Nahrefraktion zu der ursprünglichen Nahrefraktion in der Powervektorschreibweise kann der Verlauf des Brechwerts und/oder des Astigmatismus entlang der Hauptlinie entsprechend den neuen Nahrefraktionswerten angepasst werden. Dadurch ergibt sich automatisch ebenfalls eine kontinuierliche Variation des vertikalen Prismas entlang der Hauptlinie.

Das Brillenglas kann anschließend unter Berücksichtigung der neuen Werte für den Brechwert und/oder den Astigmatismus entlang der Hauptlinie berechnet bzw. optimiert werden. Die Optimierung kann mittels eines herkömmlichen Optimierungsverfahrens erfolgen.

Nachfolgend sind einige Beispiele der Umsetzung eines Prismas bzw. einer prismatischen Korrektur in einem Brillenglas angegeben.

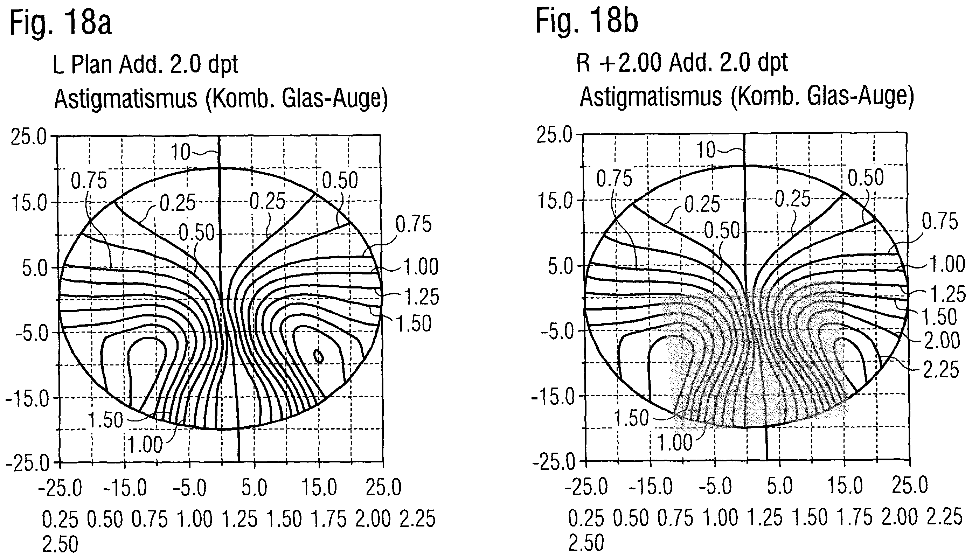

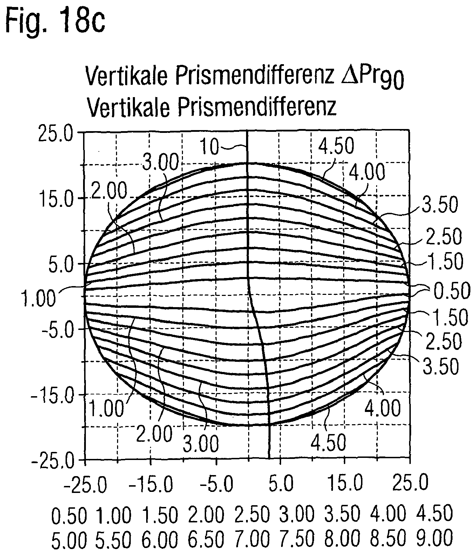

**Fig. 18** illustriert die Korrektur einer Anisometropie von 2 dpt nach aktuellem Stand der Technik am Beispiel zweier progressiver Brillengläser mit einer Addition von 2,0 dpt. Fig. 18a zeigt die Isolinien des Astigmatismus in Gebrauchsstellung des linken Brillenglases (Sph= 0,00 dpt, Add = 2,00 dpt), Fig. 18b die Isolinien des Astigmatismus in Gebrauchsstellung des rechten Brillenglases (Sph = +2,00 dpt, Add = 2,00 dpt) und Fig. 18c die Isolinien der vertikalen Prismendifferenz zwischen dem linken und dem rechten Brillenglas. Im Nahbezugspunkt B_{N} ergibt sich eine vertikale Prismendifferenz zwischen dem rechtem und dem linkem Brillenglas von 2,84 cm/m. Die hohe vertikale Prismendifferenz erschwert das binokulare Sehen und führt zu Unverträglichkeiten der Brillengläser.

Mit Hilfe des oben beschriebenen Verfahrens ist es möglich, die vertikale Prismendifferenz um 1 cm/m auf 1,84 cm/m zu reduzieren. Dies kann dadurch erreicht werden, dass der Brechwert in der Nähe rechts und/oder links derart abändert wird, dass eine Änderung der prismatischen Korrektur in der Nähe im rechten und linken Glas resultiert und zwar in der Höhe, die vorab als physiologisch notwendig definiert wurde. Dies kann durch eine Erhöhung der Addition im linken Glas um 0,25 dpt und eine Abschwächung der Addition im rechten Glas um 0,25 dpt erzielt werden.

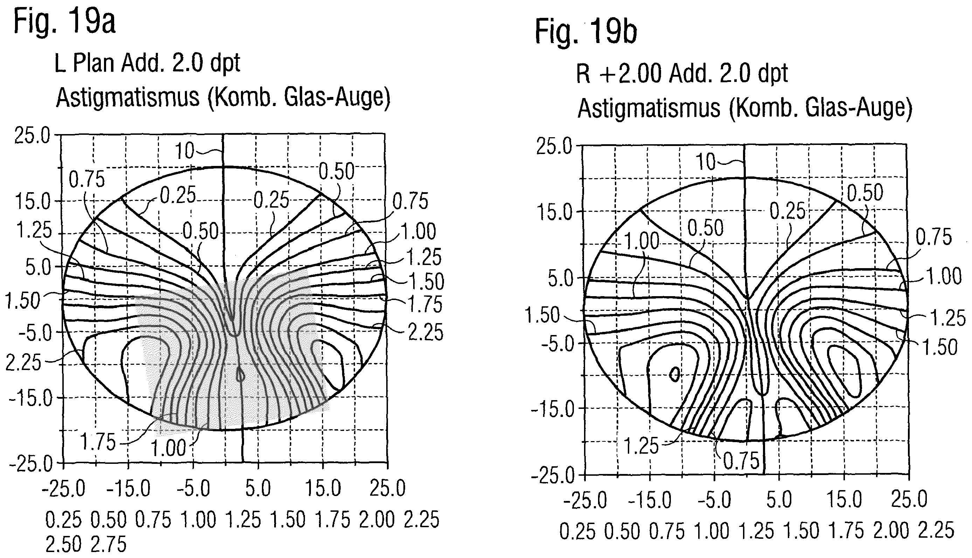

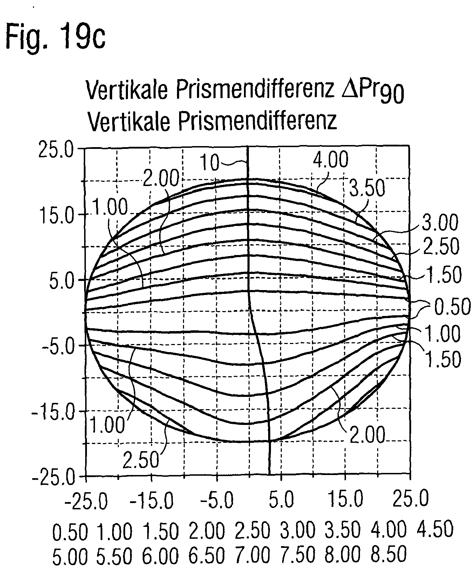

**Fig. 19** illustriert die Korrektur einer Anisometropie von 2 dpt mit einer Reduktion der vertikalen Prismendifferenz im Nahbezugspunkt B_{N} um 1 cm/m am Beispiel zweier progressiver Gläser mit einer Addition 2,0 dpt. Fig. 19a zeigt die Isolinien des Astigmatismus in Gebrauchsstellung des linken Brillenglases, bei dem das Vertikalprisma im Nahbezugspunkt B_{N} um 0,5 cm/m erhöht ist. Dies führt zu einem unerwünschten Astigmatismus im Nahbezugspunkt von 0,5 dpt und eine um 0,25 dpt stärkere Addition. Fig. 19b zeigt die Isolinien des Astigmatismus in Gebrauchsstellung des rechten Brillenglases, bei dem das Vertikalprisma im Nahbezugspunkt B_{N} um 0,5 cm/m verringert ist. Dies führt zu einem unerwünschten Astigmatismus von 0,5 dpt und eine um 0,25 dpt schwächere Addition. Fig. 19c zeigt die Isolinien der vertikalen Prismendifferenz zwischen dem linken und dem rechten Brillenglas. Im Nahbezugspunkt B_{N} ergibt sich eine vertikale Prismendifferenz zwischen dem rechtem und dem linkem Glas von 1,84 cm/m. Somit kann die vertikale Prismendifferenz um 1 cm/m von 2,84 cm/m auf 1,84 cm/m reduziert werden. Trotzt der entstehenden astigmatischen Fehler und Brechwertfehler wird das binokulare Sehen verbessert und die Verträglichkeit der Brille erhöht.

Nachfolgend wird ein weiteres beispielhaftes Verfahren zum Berechnen bzw. Optimieren der Korrekturwerte eines Brillenglaspaars zur Korrektur einer Anisometropie eines Brillenträgers beschrieben. Ziel dieses Verfahrens ist es, endgültige Sollwerte für die Brechkraft und/oder astigmatische Wirkung in den Bezugspunkte (Fern- und Nahbezugspunkt) zu erhalten, die geeignet sind, die Differenz der vertikalen prismatischen Wirkung in der Nähe, zumindest teilweise zu kompensieren. Das Brillenglas kann danach so optimiert werden, dass die endgültigen Sollwerte für die Brechkraft und/oder astigmatische Wirkung in den Bezugspunkten erreicht werden. Das Optimieren kann z.B. ein Minimieren oder Maximieren einer Zielfunktion umfassen, wie aus dem Stand der Technik bekannt ist.

Die Anfangswerte für das Verfahren umfassen die Verordnungswerte bzw. Sollwerte im Fern- und Nahbezugspunkt für das linke und das rechte Brillenglas. Die Verordnungswerte umfassen die Sphäre im Fernbezugspunkt für das rechte und das linke Auge (S_{R} and S_{L}), den Zylinder (bzw. den Betrag des Astigmatismus) im Fernbezugspunkt für das rechte und das linke Auge (C_{R} and C_{L}), die Achse des Zylinders bzw. des Astigmatismus für das rechte und das linke Auge (*α* _{R} and *α* _{L}), und gegebenenfalls (bei progressiven Brillengläsern) die Addition für beide Augen (Add_{R} and Add_{L}).

In einem ersten Schritt werden aus den Verordnungswerten die im horizontalen (*ϕ* =0) und im vertikalen (*ϕ* =90) Meridian wirksamen Werte S(0) und S(90) berechnet. Das Umrechnen kann z.B. nach der Gleichung 36 erfolgen: $S \left(φ\right) = S 1 * {cos}^{2} \left(φ-α\right) + S 2 * {sin}^{2} \left(φ-α\right) ,$ wobei S1 = S_{R,L}, S2 = S_{R,L} + C_{R,L} und φ entweder 0° oder 90° ist.

In einem zweiten Schritt wird die vertikale prismatische Wirkung Pr₉₀ im Nahbezugspunkt des jeweiligen Auges berechnet. Bei bekanntem Wirkungsverlauf kann dies direkt durch Integration von S(y, *ϕ* =90) erfolgen, ansonsten durch eine Näherungsformel, z.B. mit der Prentice-Regel, berechnet werden: ${Pr}_{90} \left(cm/m\right) = {c}_{y} \left(cm\right) * {S}_{90} ,$ wobei:
S₉₀ die auf den 90° Meridian umgerechnete sphärische Wirkung im vertikalen Meridian ist ist; und
c_{y} die Dezentration bzw. der Abstand zwischen dem Nahbezugspunkt und dem Prismenbezugspunkt ist.

Da die prismatische Wirkung ebenfalls von der Geometrie der Fläche abhängt, stellt die Prentice-Regel lediglich eine Näherung dar, die nur einen Teil der tatsächlichen prismatischen Wirkung in der Nähe angibt. Der restliche Teil hängt von der Sphäre im Fernbezugspunkt, der Addition und der Progressionslänge und kann mittels einer Interpolation der Werte für unterschiedliche Brillengläser mit unterschiedlichen Additionen, Progressionslängen und Sphären ermittelt werden. So kann der restliche Teil in einem dritten Schritt z.B. anhand einer Interpolation der Werte vier unterschiedlicher Brillengläser mit unterschiedlichen Additionen und Progressionslängen und fünf unterschiedlichen sphärischen Wirkungen im Fernbezugspunkt pro Brillenglas (insgesamt 20 Kombinationen) ermittelt werden.

Die endgültige prismatische Wirkung Pr₉₀ für jedes Brillenglas kann in einem vierten Schritt als die Summe beider Komponenten bzw. beiden Teile: ${Pr}_{90} = {Pr}_{90} \left(Prentice\right) + {Pr}_{90} \left(Fläche\right)$ berechnet werden, wobei:
Pr₉₀ (Prentice) den nach der Prentice-Regel ermittelten Teil der prismatischen Wirkung bezeichnet; und
Pr₉₀ (Fläche) den von der Fläche abhängigen Teil der prismatischen Wirkung bezeichnet.

Die Differenz der vertikalen prismatischen Wirkung für das linke und das rechte Brillenglas kann somit in einem fünften Schritt wie folgt berechnet werden: $Δ {Pr}_{RL} = {Pr}_{90 R} - {Pr}_{90 L}$

Mittels einer Modifikation der Sollwerte für die Sphäre und/oder den Zylinder (Astigmatismus) im Nahbezugspunkt ist es möglich, diese prismatische Differenz zumindest teilweise zu kompensieren bzw. zu reduzieren.

Zunächst kann in einem sechsten Schritt eine neue, theoretische Addition bei 90° im Nahbezugspunkt berechnet werden, die erforderlich ist, um die vertikale prismatische Differenz zumindest teilweise zu kompensieren. Insbesondere wird im sechsten Schritt ein neuer Wert für die auf dem 90° Meridian umgerechnete Sphäre im Nahbezugspunkt berechnet, da die Addition den Unterschied zwischen der Sphäre im Fernbezugspunkt und der Sphäre im Nahbezugspunkt darstellt. Dies kann nach dem oben beschriebenen Verfahren erfolgen. Dabei kann berücksichtigt werden, ob die Korrektur auf einem der Brillengläser oder auf beiden Brillengläser angewandt wird.

Anhand dieser Berechnung kann in einem siebten Schritt eine neue Refraktion im Nahbezugspunkt (d.h. eine neue Sphäre und/oder einen neuen Zylinder bzw. Astigmatismus) ermittelt werden, um die vertikale Prismendifferenz zumindest teilweise zu kompensieren. Dies umfasst ein Berechnen der Differenz ΔAdd₉₀ zwischen der anfänglichen Addition bei 90° und der zuvor ermittelten neuen theoretischen Addition bei 90°. Abhängig davon, ob die Addition oder der Zylinder bzw. Astigmatismus modifiziert werden soll, kann eine entsprechende Differenz auch auf die auf den 0° Meridian umgerechnete Addition im Nahbezugspunkt aufaddiert werden. Diese zusätzliche Differenz kann z.B. 0, -ΔAdd₉₀ oder ΔAdd₉₀ sein (siehe z.B. Fig. 16).

Es ist somit möglich, Korrekturwerte für die Sphäre und/der Zylinder bzw. für die Sollwerte im Nahbezugspunkt (Sₖₒᵣᵣ und Cₖₒᵣᵣ) zu ermitteln, die geeignet sind, zumindest teilweise die vertikale Prismendifferenz zu kompensieren. Diese Korrekturwerte können mit den anfänglichen Refraktionswerten kombiniert werden, z.B. mittels Powervektoren, um die neuen Refraktionswerte für den Nahbezugspunkt zu erhalten.

Die Wiederholung des zweiten bis fünfen Schritts mit den neuen Refraktionswerten ergibt die neue kompensierte vertikale Prismendifferenz (achter Schritt).

Das Brillenglas kann anschließend entsprechend den neuen Refraktionswerten bzw. neuen Sollwerten optimiert werden (z.B. nach einem herkömmlichen Optimierungsverfahren mittels Minimieren oder Maximieren einer Zielfunktion).

Es ist möglich, Randbedingungen bzw. Kriterien für die Berechnung neuer kompensierter Werte vorzugeben. Die Randbedingungen können z.B. die maximal zulässige Änderung der Addition und/oder die maximale zulässige Änderung des Astigmatismus und/oder die maximal zulässige Prismendifferenz sein. Ein Default- bzw. Standardkriterium kann ferner sein, dass die Addition strikt positiv ist. Die berechneten Korrekturwerte können mit den entsprechenden Randbedingungen bzw. den Kriterien verglichen werden. Sollten die Korrekturwerte außerhalb der zulässigen Grenzen liegen (z.B., die zulässigen maximalen Werte überschreiten), kann die Höhe der Korrektur reduziert werden, bis die zulässigen Grenzen eingehalten werden. Das obige Verfahren kann somit iterativ durchgeführt werden, wobei bei jedem Loop bzw. in jeder Runde, die ermittelten Werte mit den vorgegebenen Randbedingungen bzw. Kriterien verglichen werden und die Iteration dann gestoppt wird, wenn alle Randbedingungen erfüllt sind. Um Fehler oder Approximationen während des iterativen Prozesses zu detektieren und auszuschließen, kann die prismatische Differenz unabhängig von den anderen Werten kontrolliert werden.

Die nachfolgenden Tabellen enthalten beispielhafte Parameter von Brillengläsern zur Anisometropiekorrektur, wobei S die Sphäre, C den Zylinder und α die Achse des Zylinders bezeichnen:

### Beispiel 1

Das Hauptkriterium bzw. die Randbedingung beim Berechnen von kompensierten Refraktionswerten zur Reduktion der vertikalen Prismendifferenz ist, dass der Zylinder im Nahbezugspunkt um nicht mehr als 1 dpt verändert wird. Die Korrektur wird auf beiden Brillengläsern angewandt. Ferner wird die Korrektur sowohl auf die Addition als auch auf den Zylinder im Nahbezugspunkt angewandt. Tabelle 2 enthält die Anfangswerte und die ermittelten Korrekturwerte des linken (L) und des rechten (R) Brillenglases des Brillenglaspaars.

**Tabelle 2**

| | | **Anfangswerte** | | **Korrekturwerte** | |
|---|---|---|---|---|---|
| | | **R** | **L** | **R** | **L** |
| **Ferne** | **S** | 5 dpt | 7 dpt | 5 dpt | 7 dpt |
| | **C** | 1 dpt | 1,5 dpt | 1 dpt | 1,5 dpt |
| | ***α*** | 0° | 5° | 0° | 5° |
| **Nähe** | **S** | 7 dpt | 9 dpt | 7 dpt | 9 dpt |
| | **C** | 1 dpt | 1,5 dpt | 1,99 dpt | 0,51 dpt |
| | α | 0° | 5° | 0° | 0° |
| **Add** | | 2 dpt | 2 dpt | 2,5 | 1,51 |
| **ΔPr_{RL}** | | 3,24 cm/m | | 1,79 cm/m | |

### Beispiel 2a

Das Hauptkriterium bei dem Berechnen von kompensierten Refraktionswerten zur Reduktion der vertikalen Prismendifferenz ist, dass der Zylinder im Nahbezugspunkt um nicht mehr als 1 dpt verändert wird. Die Korrektur wird auf beiden Brillengläsern angewandt. Ferner wird die Korrektur nur auf den Zylinder im Nahbezugspunkt angewandt. Tabelle 3 enthält die Anfangswerte und die ermittelten Korrekturwerte des linken (L) und des rechten (R) Brillenglases des Brillenglaspaars.

**Tabelle 3**

| | | **Anfangswerte** | | **Korrekturwerte** | |
|---|---|---|---|---|---|
| | | **R** | **L** | **R** | **L** |
| **Ferne** | **S** | 0,00 dpt | -1,00 dpt | 0,00 dpt | -1,00 dpt |
| | **C** | 2,00 dpt | 1,00 dpt | 2,00 dpt | 1,00 dpt |
| | **α** | 10° | 170° | 10° | 170° |
| **Nähe** | **S** | 2,00 dpt | 1,00 dpt | 2,50 dpt | 0,51 dpt |
| | **C** | 2,00 dpt | 1,00 dpt | 1,00 dpt | 1,99 dpt |
| | **α** | 10° | 170° | 21,54° | 175,04° |
| **Add** | | 2,00 dpt | 2,00 dpt | 2,00 dpt | 2,00 dpt |
| **ΔPr_{RL}** | | 2,86 cm/m | | 1,90 cm/m | |

### Beispiel 2b

Das Hauptkriterium bei dem Berechnen von kompensierten Refraktionswerten zur Reduktion der vertikalen Prismendifferenz ist, dass der Zylinder im Nahbezugspunkt um nicht mehr als 1 dpt verändert wird. Die Korrektur wird auf beiden Brillengläsern angewandt. Ferner wird die Korrektur sowohl auf die Addition als auch auf den Zylinder im Nahbezugspunkt angewandt. Tabelle 4 enthält die Anfangswerte und die ermittelten Korrekturwerte des linken (L) und des rechten (R) Brillenglases des Brillenglaspaars.

**Tabelle 4**

| | | **Anfangswerte** | | **Korrekturwerte** | |
|---|---|---|---|---|---|
| | | **R** | **L** | **R** | **L** |
| **Ferne** | **S** | 0,00 dpt | -1,00 dpt | 0,00 dpt | -1,00 dpt |
| | **C** | 2,00 dpt | 1,00 dpt | 2,00 dpt | 1,00 dpt |
| | **α** | 10° | 170° | 10° | 170° |
| **Nähe** | **S** | 2,00 dpt | 1,00 dpt | 1,93 dpt | 1.02 dpt |
| | **C** | 2,00 dpt | 1,00 dpt | 1,00 dpt | 1,99 dpt |
| | **α** | 10° | 170° | 21,54° | 175,04° |
| **Add** | | 2,00 dpt | 2,00 dpt | 1,43 dpt | 2,51 dpt |
| **ΔPr_{RL}** | | 2,86 cm/m | | 0,94 cm/m | |

### Beispiel 3

Die Hauptkriterien bei dem Berechnen von kompensierten Refraktionswerten zur Reduktion der vertikalen Prismendifferenz sind, dass der Zylinder im Nahbezugspunkt um nicht mehr als 1 dpt verändert wird und dass der Zylinder des rechten Auges 0 ist. Die Korrektur wird auf beiden Brillengläsern angewandt. Ferner wird die Korrektur wird sowohl auf die Addition als auch auf den Zylinder im Nahbezugspunkt angewandt. Tabelle 5 enthält die Anfangswerte und die ermittelten Korrekturwerte des linken (L) und des rechten (R) Brillenglases des Brillenglaspaars.

**Tabelle 5**

| | | **Anfangswerte** | | **Korrekturwerte** | |
|---|---|---|---|---|---|
| | | **R** | **L** | **R** | **L** |
| **Ferne** | **S** | 0 dpt | -2,00 dpt | 0 dpt | -2,00 dpt |
| | **C** | 0,50 dpt | 0,25 dpt | 0,50 dpt | 0,25 dpt |
| | **α** | 0 | 15 | 0 | 15 |
| **Nähe** | **S** | 1,25 dpt | -0,75 dpt | 1,25 dpt | -0,74 dpt |
| | **C** | 0,25 dpt | 0,50 dpt | | 1,25 dpt |
| | **α** | 15° | 0° | | 2,87° |
| **Add** | | 1,25 dpt | 1,25 dpt | 1,00 | 1,76 dpt |
| **ΔPr_{RL}** | | 3,48 cm/m | | 2,10 cm/m | |

### Beispiel 4

Das Hauptkriterium bei dem Berechnen von kompensierten Refraktionswerten zur Reduktion der vertikalen Prismendifferenz ist, dass die Addition um nicht mehr als 1 dpt verändert wird. Ferner wird die Korrektur sowohl auf die Addition als auch auf den Zylinder im Nahbezugspunkt angewandt. Tabelle 6 enthält die Anfangswerte und die ermittelten Korrekturwerte des linken (L) und des rechten (R) Brillenglases des Brillenglaspaars.

**Tabelle 6**

| | | **Anfangswerte** | | **Korrekturwerte** | |
|---|---|---|---|---|---|
| | | **R** | **L** | **R** | **L** |
| **Ferne** | **S** | -5,00 dpt | -7,00 dpt | -5,00 dpt | -7,00 dpt |
| | **C** | | 0,50 dpt | | 0,50 dpt |
| | **α** | | 0 | | 0 |
| **Nähe** | **S** | -2,50 dpt | -4,50 dpt | -3,49 dpt | -4,50 dpt |
| | **C** | | 0,50 dpt | | 0,50 dpt |
| | **α** | | 0 | | 0 |
| **Add** | | 2,50 dpt | 2,50 dpt | 1,51 dpt | 2,50 dpt |
| **ΔPr_{RL}** | | 2,23 cm/m | | 1,34 cm/m | |

### Beispiel 5

Bei diesem Beispiel gibt es keine Beschränkungen hinsichtlich der Korrektur. Die Korrektur wird auf beide Augen angewandt. Ferner wird die Korrektur sowohl auf die Addition als auch auf den Zylinder im Nahbezugspunkt angewandt. Tabelle 6 enthält die Anfangswerte und die ermittelten Korrekturwerte des linken (L) und des rechten (R) Brillenglases des Brillenglaspaars.

**Tabelle 7**

| | | **Anfangswerte** | | **Korrekturwerte** | |
|---|---|---|---|---|---|
| | | **R** | **L** | **R** | **L** |
| **Ferne** | **S** | 1,75 dpt | 3,25 dpt | 1,75 dpt | 3,25 dpt |
| | **C** | 0,25 | | 0,25 | |
| | **α** | 5° | | 5° | |
| **Nähe** | **S** | 3,50 dpt | 5,00 dpt | 3,50 dpt | 4,01 dpt |
| | **C** | 0,25 dpt | | 1,25 dpt | 0,99 dpt |
| | **α** | 5° | | 1° | 90° |
| **Add** | | 1,75 dpt | 1,75 dpt | 2,25 dpt | 1,25 dpt |
| **ΔPr_{RL}** | | 1,78 cm/m | | 0,06 cm/m | |

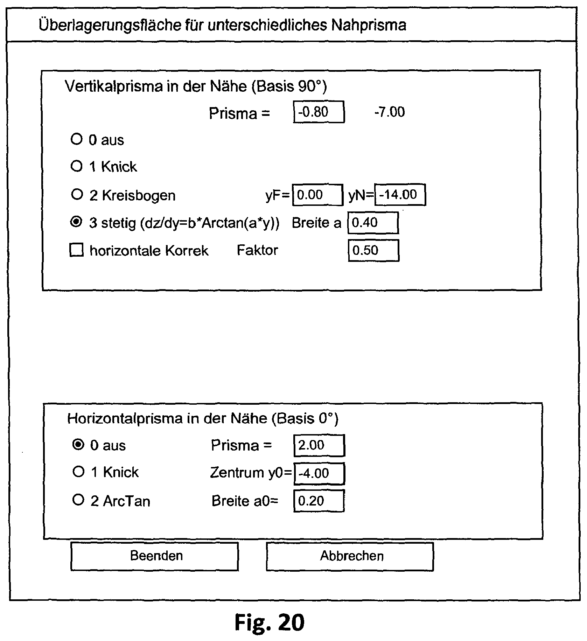

**Fig. 20** zeigt eine beispielhafte graphische Benutzerschnittstelle eines Computerprogramms, das ein Verfahren zum Berechnen eines vertikalen und/oder horizontalen Prismas bei einem Brillenglas (z.B. einem Einstärkenbrillenglas oder einem progressiven Brillenglas) implementiert. Die graphische Benutzerschnittstelle umfasst Abschnitte bzw. Felder, die es ermöglichen, das gewünschte horizontale und/oder vertikale Prisma einzugeben. Des Weiteren umfasst die graphische Benutzerschnittstelle Abschnitte, die es ermöglichen, die Parameter der Überlagerungsfläche einzugeben und/oder diese Parameter anzuzeigen.

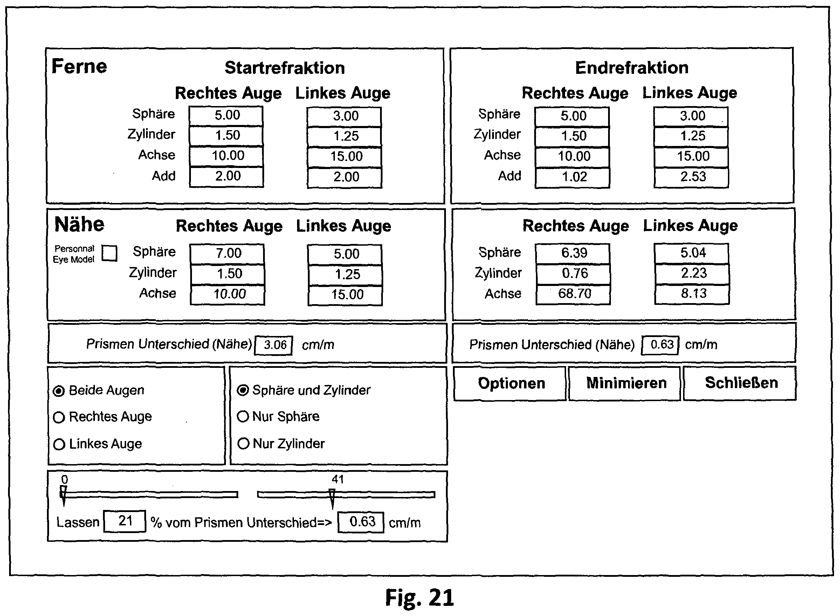

**Fig. 21** zeigt eine beispielhafte graphische Benutzerschnittstelle eines Computerprogramms, das ein Verfahren zum Berechnen bzw. Optimieren der Korrekturwerte eines Brillenglaspaars zur Korrektur einer Anisometropie eines Brillenträgers implementiert. Die graphische Benutzerschnittstelle umfasst Abschnitte, die es ermöglichen, Randbedingungen für die Korrektur einzugeben. Des Weiteren umfasst die graphische Benutzerschnittstelle Abschnitte, die es ermöglichen, die anfänglichen Refraktionswerte und/oder die ermittelten Korrekturwerte des linken und des rechten Brillenglases anzugeben und/oder diese Werte anzuzeigen.

## Patentansprüche

1. Computerimplementiertes Verfahren zum Berechnen oder Optimieren eines Brillenglases zum Zweck der Fertigung des berechneten oder optimierten Brillenglases umfassend:
Erfassen eines Soll-Brechwerts und/oder eines Soll-Astigmatismus in einem Nahbezugspunkt des Brillenglases,
Bestimmen eines Korrekturwerts des vertikalen und/oder horizontalen Prismas im Nahbezugspunkt des Brillenglases;
Abändern des Soll-Brechwerts und/oder des Soll-Astigmatismus im Nahbezugspunkt anhand des Korrekturwerts des vertikalen und/oder horizontalen Prismas des Brillenglases;
Ermitteln eines kontinuierlichen Verlaufs des Soll-Brechwerts und/oder des Soll-Astigmatismus entlang einer Hauptlinie (10) des Brillenglases anhand des abgeänderten Brechwerts und/oder Soll-Astigmatismus im Nahbezugspunkt;
Berechnen oder Optimieren des Brillenglases anhand des abgeänderten Soll-Brechwerts und/oder Soll-Astigmatismus im Nahbezugspunkt und des ermittelten Verlaufs des Soll-Brechwerts und/oder des Soll-Astigmatismus entlang der Hauptlinie (10).

2. Verfahren nach Anspruch 1, wobei das Abändern der Anfangswerte für den Soll-Brechwert und/oder den Soll-Astigmatismus im Nahbezugspunkt die folgenden Schritte umfasst:
Berechnen eines zusätzlichen Brechwerts und/oder eines zusätzlichen Astigmatismus im Nahbezugspunkts des Brillenglases anhand des Korrekturwerts des vertikalen und/oder horizontalen Prismas im Nahbezugspunkt des Brillenglases; und
Addieren des zusätzlichen Brechwerts und/oder des zusätzlichen Astigmatismus zu dem Soll-Brechwert und/oder dem Soll-Astigmatismus im Nahbezugspunkt.

3. Verfahren nach Anspruch 1 oder 2, wobei das Bestimmen eines Korrekturwerts des vertikalen und/oder horizontalen Prismas im Nahbezugspunkt des Brillenglases die folgenden Schritte umfasst:
Ermitteln eines physiologisch notwendigen Ausgleichs einer Differenz zwischen dem vertikalen Prisma im Nahbezugspunkt des Brillenglases und dem vertikalen Prisma im Nahbezugspunkt eines zweiten Brillenglases, wobei das zweite Brillenglas eine Wirkung aufweist, die sich von der Wirkung des Brillenglases unterscheidet.

4. Verfahren nach einem der vorangegangenen Ansprüche, wobei das Abändern des Soll-Brechwerts und/oder des Soll-Astigmatismus im Nahbezugspunkt:
- visusabhängig; und/oder
- in Abhängigkeit von den Aberrationen Höherer Ordnung; und/oder
- in Abhängigkeit von dem Astigmatismus des Brillenträgers; und/oder
- in Abhängigkeit vom dominanten Auge
erfolgt.

5. Verfahren nach einem der vorangegangenen Ansprüche, ferner umfassend:
Ermitteln eines kontinuierlichen Verlaufs des horizontalen und/oder vertikalen Prismas entlang der Hauptlinie (10) des Brillenglases derart, dass sich der Wert des horizontalen und/oder vertikalen Prismas von einem vorgegeben Wert zum Wert im Nahbezugspunkt kontinuierlich ändert, wobei
das Berechnen oder Optimieren des Brillenglases ferner anhand des ermittelten Verlaufs des horizontalen und/oder vertikalen Prismas entlang der Hauptlinie (10) erfolgt.

6. Verfahren zum Berechnen eines Brillenglases nach Anspruch 5, wobei das Ermitteln eines kontinuierlichen Verlaufs des horizontalen und/oder vertikalen Prismas die folgenden Schritte umfasst:
Ermitteln einer Überlagerungsfläche oder eines Überlagerungsflächenstreifens mit einer Hauptlinie, welche der Hauptlinie (10) des Brillenglases entspricht, wobei die Überlagerungsfläche oder der Überlagerungsstreifen die kontinuierliche Änderung des horizontalen und/oder vertikalen Prismas entlang der Hauptlinie aufweist; und
Addieren der Pfeilhöhen der Überlagerungsfläche und der Vorder- oder Rückfläche des Brillenglases.

7. Verfahren gemäß einem der vorangegangenen Ansprüche, wobei das Brillenglas ein progressives Brillenglas ist.

8. Verfahren zum Berechnen oder Optimieren eines Brillenglaspaars zur Korrektur einer Anisometropie eines Brillenträgers zum Zweck der Fertigung des berechneten oder optimierten Brillenglaspaars, umfassend:
Erfassen von Anfangsrefraktionswerten jedes der beiden Brillengläser des Brillenglaspaars, wobei die Anfangsrefraktionswerte den Soll-Brechwert und/oder den Soll-Astigmatismus in einem Fernbezugspunkt und in einem Nahbezugspunkt umfassen;
Berechnen oder Optimieren zumindest eines der beiden Brillengläser des Brillenglaspaars nach dem Verfahren gemäß einem der Ansprüche 1 bis 7, wobei
das vertikale und/oder horizontale Prisma im Nahbezugspunkt des zu berechnenden oder optimierenden Brillenglases in Abhängigkeit von der Differenz der Anfangsrefraktionswerte der beiden Brillengläser des Paars bestimmt wird.

9. Vorrichtung zum Berechnen oder Optimieren eines Brillenglases oder eines Brillenglaspaars zum Zweck der Fertigung des berechneten oder optimierten Brillenglases oder Brillenglaspaars, wobei die Vorrichtung umfasst:
Erfassungsmittel zum Erfassen eines Soll-Brechwerts und/oder eines Soll-Astigmatismus in einem Nahbezugspunkt des Brillenglases oder der Brillengläser eines Brillenglaspaars, und
eine Rechenvorrichtung, welche ausgelegt ist,
einen Korrekturwert des vertikalen und/oder horizontalen Prismas im Nahbezugspunkt des Brillenglases oder zumindest eines der Brillengläser des Brillenglaspaars zu bestimmen;
den Soll-Brechwert und/oder den Soll-Astigmatismus im Nahbezugspunkt des Brillenglases oder des zumindest einen Brillenglases oder des Brillenglaspaars anhand des zuvor bestimmten Korrekturwerts des vertikalen und/oder horizontalen Prismas abzuändern;
einen kontinuierlichen Verlauf des Soll-Brechwerts und/oder des Soll-Astigmatismus entlang einer Hauptlinie (10) des Brillenglases anhand des abgeänderten Brechwerts und/oder Soll-Astigmatismus im Nahbezugspunkt zu ermitteln; und
zumindest eine Fläche des Brillenglases oder des zumindest einen der Brillengläser des Brillenglaspaars anhand des abgeänderten Soll-Brechwerts und/oder Soll-Astigmatismus im Nahbezugspunkt und des ermittelten Verlaufs des Soll-Brechwerts und/oder des Soll-Astigmatismus entlang der Hauptlinie (10) zu berechnen oder optimieren.

10. Computerprogrammerzeugnis, welches ausgelegt ist, wenn geladen und ausgeführt auf einem Computer, ein Verfahren zum Berechnen oder Optimieren eines Brillenglases zum Zweck der Fertigung des berechneten und optimierten Brillenglases gemäß einem der Ansprüche 1 bis 7 oder ein Verfahren zum Berechnen oder Optimieren eines Brillenglaspaars zum Zweck der Fertigung des berechneten und optimierten Brillenglaspaars gemäß Anspruch 8 durchzuführen.

11. Verfahren zum Herstellen eines Brillenglases oder eines Brillenglaspaars umfassend:
Berechnen oder Optimieren eines Brillenglases nach dem Verfahren zum Berechnen oder Optimieren eines Brillenglases gemäß einem der Ansprüche 1 bis 7, oder Berechnen oder Optimieren eines Brillenglaspaars nach dem Verfahren zum Berechnen oder Optimieren eines Brillenglaspaars gemäß Anspruch 8;
Fertigen des so berechneten oder optimierten Brillenglases oder Brillenglaspaars.

12. Vorrichtung zum Herstellen eines Brillenglases oder eines Brillenglaspaars umfassend:
Rechenvorrichtung, welche ausgelegt ist, das Brillenglas nach einem Verfahren zum Berechnen oder Optimieren eines Brillenglases gemäß einem der Ansprüche 1 bis 7 zu berechnen oder zu optimieren, oder das Brillenglaspaar nach einem Verfahren zum Berechnen oder Optimieren eines Brillenglaspaars gemäß Anspruch 8 zu berechnen oder zu optimieren;
Bearbeitungsmittel, welche ausgelegt sind, das Brillenglas oder das Brillenglaspaar fertig zu bearbeiten.

13. Brillenglas mit einem ersten Bezugspunkt, einem Nahbezugspunkt und zwei permanenten Markierungen in Form von Mikrogravuren, wobei der erste Bezugspunkt der Fernbezugspunkt oder der Zentrierpunkt ist, wobei das Brillenglas ferner nicht permanente Stempelmarkierungen umfasst, welche jeweils den ersten Bezugspunkt und den Nahbezugspunkt kennzeichnen, und wobei:
der Astigmatismus im Nahbezugspunkt um mindestens 0,5 dpt von dem Astigmatismus im ersten Bezugspunkt abweicht; und
die Differenz der vertikalen prismatischen Wirkung im ersten Bezugspunkt und der vertikalen prismatischen Wirkung im Nahbezugspunkt um mindestens 0,5 cm/m von einem Wert *ΔPr₉₀* abweicht, und/oder
die Differenz der horizontalen prismatischen Wirkung im ersten Bezugspunkt und der horizontalen prismatischen Wirkung im Nahbezugspunkt um mindestens 0,5 cm/m von einem Wert *ΔPr₀* abweicht, wobei: $Δ {Pr}_{90} = - 0 , 1 \left(-2,5+0,05{S}_{N 90}^{2}+\left({S}_{F 90}+0,8{Add}_{90}\right)\left({y}_{BN}-{y}_{BF}\right)+0,025{Add}_{90}\left(\begin{matrix}{y}_{BN}^{2} - \\ {y}_{NF}^{2}\end{matrix}\right)\right) ;$ und $Δ {Pr}_{0} = 0 , 05 \left({S}_{F 0}+{S}_{N 0}\right) \left({x}_{BN}-{x}_{BF}\right) ,$ und wobei:
*x_{BF}* die horizontale Koordinate des ersten Bezugspunktes bezeichnet;
*x_{BN}* die horizontale Koordinate des Nahbezugspunktes bezeichnet;
*y_{BF}* die vertikale Koordinate des ersten Bezugspunktes bezeichnet;
*y_{BN}* die vertikale Koordinate des Nahbezugspunktes bezeichnet;
*S_{F90}* den Brechwert in vertikaler Richtung im ersten Bezugspunkt bezeichnet;
*S_{N90}* den Brechwert in vertikaler Richtung im Nahbezugspunkt bezeichnet;
*Add₉₀* = *S_{N90}* - *S_{F90}* die vertikale Addition bezeichnet;
*S_{F0}* den Brechwert in horizontaler Richtung im ersten Bezugspunkt bezeichnet;
*S_{N0}* den Brechwert in horizontaler Richtung im Nahbezugspunkt bezeichnet; und
*Add₀* = *S_{N0}* - *S_{F0}* die horizontale Addition bezeichnet,
die horizontale Richtung durch eine die permanenten Markierungen verbindende Gerade vorgegeben wird und die vertikale Richtung senkrecht zur horizontalen Richtung ist.

14. Brillenglas mit zwei permanenten Markierungen in Form von Mikrogravuren, einem ersten Bezugspunkt und einem Nahbezugspunkt, wobei der erste Bezugspunkt in der Mitte zwischen den permanenten Markierungen liegt, wobei das Brillenglas ferner eine nicht permanente Stempelmarkierung umfasst, die den Nahbezugspunkt kennzeichnet, und der Nahbezugspunkt relativ zum ersten Bezugspunkt um 16 mm nach unten und 2,5 mm nasal versetzt ist, wobei:
der Astigmatismus im Nahbezugspunkt um mindestens 0,5 dpt von dem Astigmatismus im ersten Bezugspunkt abweicht; und
die Differenz der vertikalen prismatischen Wirkung im ersten Bezugspunkt und der vertikalen prismatischen Wirkung im Nahbezugspunkt um mindestens 0,5 cm/m von einem Wert *ΔPr₉₀* abweicht, und/oder
die Differenz der horizontalen prismatischen Wirkung im ersten Bezugspunkt und der horizontalen prismatischen Wirkung im Nahbezugspunkt um mindestens 0,5 cm/m von einem Wert *ΔPr₀* abweicht, wobei: $Δ {Pr}_{90} = 0 , 2 + 0 , 7008 {S}_{F} + 0 , 8992 {S}_{N} - 0 , 008 {S}_{N}^{2} ,$ und $Δ {Pr}_{0} = - \frac{{S}_{F 0} + {S}_{N 0}}{8} ,$ und wobei:
*S_{F90}* den Brechwert in vertikaler Richtung im ersten Bezugspunkt bezeichnet;
*S_{N90}* den Brechwert in vertikaler Richtung im Nahbezugspunkt bezeichnet;
*S_{F0}* den Brechwert in horizontaler Richtung im ersten Bezugspunkt bezeichnet;
*S_{N0}* den Brechwert in horizontaler Richtung im Nahbezugspunkt bezeichnet; und
wobei
die horizontale Richtung durch eine die permanenten Markierungen verbindende Gerade vorgegeben wird und die vertikale Richtung senkrecht zur horizontalen Richtung ist.

15. Brillenglas nach einem der Ansprüche 13 bis 14, wobei das Brillenglas ein Einstärkenbrillenglas oder ein progressives Brillenglas ist, welches eine mittlere sphärische Wirkung *S_{F}* im ersten Bezugspunkt, eine mittlere sphärische Wirkung *S_{N}* im Nahbezugspunkt und eine Addition *Add = S_{N} - S_{F}* aufweist, wobei: $- 6 , 0 dpt \leq {S}_{F} \leq + 6 , 0 dpt und Add \leq 2 , 50 dpt .$

## Claims

1. A computer-implemented method for calculating or optimizing an eyeglass lens for the purpose of manufacturing the calculated or optimized eyeglass lens, comprising:
determining a target refractive power and/or a target astigmatism at a near reference point of the eyeglass lens,
determining a correction value for the vertical and/or horizontal prism at the near reference point of the eyeglass lens;
modifying the target refractive power and/or the target astigmatism at the near reference point based on the correction value of the vertical and/or horizontal prism of the eyeglass lens;
determining a continuous profile of the target refractive power and/or target astigmatism along a principal line (10) of the eyeglass lens based on the modified refractive power and/or target astigmatism at the near reference point;
calculating or optimizing the lens based on the modified target refractive power and/or target astigmatism at the near reference point and the determined profile of the target refractive power and/or target astigmatism along the principal line (10).

2. The method according to claim 1, wherein modifying the initial values for the target refractive power and/or the target astigmatism at the near reference point comprises the following steps:
calculating an additional refractive power and/or an additional astigmatism at the near reference point of the eyeglass lens based on the correction value of the vertical and/or horizontal prism at the near reference point of the eyeglass lens; and
adding the additional refractive power and/or the additional astigmatism to the target refractive power and/or the target astigmatism at the near reference point.

3. The method according to claim 1 or 2, wherein determining a correction value for the vertical and/or horizontal prism at the near reference point of the eyeglass lens comprises the following steps:
determining a physiologically necessary compensation for a difference between the vertical prism at the near reference point of the lens and the vertical prism at the near reference point of a second lens, wherein the second lens has an effect that differs from the effect of the first lens.

4. A method according to any of the preceding claims, wherein the modification of the target refractive power and/or the target astigmatism at the near reference point is:
- is vision-dependent; and/or
- depends on higher-order aberrations; and/or
- depends on the wearer's astigmatism; and/or
- depends on the dominant eye.

5. A method according to any of the preceding claims, further comprising:
determining a continuous profile of the horizontal and/or vertical prism along the principal line (10) of the lens such that the value of the horizontal and/or vertical prism changes continuously from a predetermined value to the value at the near reference point, wherein
the calculation or optimization of the eyeglass lens is further performed based on the determined profile of the horizontal and/or vertical prism along the main line (10).

6. A method for calculating an eyeglass lens according to claim 5, wherein the determination of a continuous profile of the horizontal and/or vertical prism comprises the following steps:
determining a superimposed surface or a superimposed surface strip having a main line that corresponds to the main line (10) of the eyeglass lens, wherein the superimposed surface or strip exhibits the continuous variation of the horizontal and/or vertical prism along the main line; and
adding the arrow heights of the superimposed surface and the front or back surface of the eyeglass lens.

7. A method according to any of the preceding claims, wherein the lens is a progressive lens.

8. A method for calculating or optimizing a pair of lenses to correct anisometropia in a spectacle wearer for the purpose of manufacturing the calculated or optimized pair of lenses, comprising:
determining initial refractive values for each of the two lenses in the pair of lenses, wherein the initial refractive values comprise the target refractive power and/or the target astigmatism at a distance reference point and at a near reference point;
calculating or optimizing at least one of the two lenses of the pair of lenses according to the method set forth in any one of claims 1 through 7, wherein
the vertical and/or horizontal prism at the near reference point of the lens to be calculated or optimized is determined based on the difference between the initial refractive values of the two lenses of the pair.

9. A device for calculating or optimizing a lens or a pair of lenses for the purpose of manufacturing the calculated or optimized lens or pair of lenses, wherein the device comprises:
sensing means for detecting a target refractive power and/or a target astigmatism at a near reference point of the lens or the lenses of a pair of lenses, and
a computing device configured to
determine a correction value for the vertical and/or horizontal prism at the near reference point of the eyeglass lens or at least one of the lenses in the pair of eyeglass lenses;
modifying the target refractive power and/or the target astigmatism at the near reference point of the lens or the at least one lens or the pair of lenses based on the previously determined correction value of the vertical and/or horizontal prism;
determining a continuous profile of the target refractive power and/or target astigmatism along a principal line (10) of the lens based on the modified refractive power and/or target astigmatism at the near reference point; and
calculating or optimizing at least one surface of the lens or of at least one of the lenses in the pair of lenses based on the modified target refractive power and/or target astigmatism at the near reference point and the determined profile of the target refractive power and/or target astigmatism along the main line (10).

10. A computer program product configured, when loaded and executed on a computer, to carry out a method for calculating or optimizing a lens for the purpose of manufacturing the calculated and optimized lens according to any one of claims 1 through 7, or a method for calculating or optimizing a pair of lenses for the purpose of manufacturing the calculated and optimized pair of lenses according to claim 8.

11. A method for manufacturing an eyeglass lens or a pair of eyeglass lenses, comprising:
calculating or optimizing an eyeglass lens according to the method for calculating or optimizing an eyeglass lens as set forth in any one of claims 1 through 7, or calculating or optimizing a pair of eyeglass lenses according to the method for calculating or optimizing a pair of eyeglass lenses as set forth in claim 8;
manufacturing the eyeglass lens or pair of eyeglass lenses thus calculated or optimized.

12. Apparatus for manufacturing an eyeglass lens or a pair of eyeglass lenses, comprising:
a computing device configured to calculate or optimize the eyeglass lens according to a method for calculating or optimizing an eyeglass lens according to any one of claims 1 through 7, or to calculate or optimize the pair of eyeglass lenses according to a method for calculating or optimizing a pair of eyeglass lenses according to claim 8;
machining means configured to finish-machine the eyeglass lens or the pair of eyeglass lenses.

13. An eyeglass lens having a first reference point, a near reference point, and two permanent markings in the form of micro-engravings, wherein the first reference point is the distance reference point or the centering point, wherein the eyeglass lens further comprises nonpermanent stamped markings that respectively identify the first reference point and the near reference point, and wherein:
the astigmatism at the near reference point differs by at least 0.5 dpt from the astigmatism at the first reference point; and
the difference between the vertical prismatic power at the first reference point and the vertical prismatic power at the near reference point differs by at least 0.5 cm/m from a value *ΔPr₉₀,* and/or
the difference between the horizontal prismatic power at the first reference point and the horizontal prismatic power at the near reference point deviates by at least 0.5 cm/m from a value *ΔPr₀,* wherein: $Δ {Pr}_{90} = - 0 , 1 \left(-2,5+0,05{S}_{N 90}^{2}+\left({S}_{F 90}+0,8{Add}_{90}\right)\left({y}_{BN}-{y}_{BF}\right)+0,025{Add}_{90}\left(\begin{matrix}{y}_{BN}^{2} - \\ {y}_{NF}^{2}\end{matrix}\right)\right) ;$ and $Δ {Pr}_{0} = 0 , 05 \left({S}_{F 0}+{S}_{N 0}\right) \left({x}_{BN}-{x}_{BF}\right) ,$ and wherein:
*x_{BF}* denotes the horizontal coordinate of the first reference point;
*x_{BN}* denotes the horizontal coordinate of the near reference point;
*y_{BF}* denotes the vertical coordinate of the first reference point;
*y_{BN}* denotes the vertical coordinate of the near reference point;
*S_{F90}* denotes the refractive index in the vertical direction at the first reference point;
*S_{N90}* denotes the refractive index in the vertical direction at the near reference point;
*Add₉₀* = *S_{N90}* - *S_{F90}* denotes the vertical addition;
*S_{F0}* denotes the refractive power in the horizontal direction at the first reference point;
*S_{N0}* denotes the refractive power in the horizontal direction at the near reference point;
and
*Add₀* = *S_{N0}* - *S_{F0}* denotes the horizontal addition,
the horizontal direction is defined by a straight line connecting the permanent markings, and the vertical direction is perpendicular to the horizontal direction.

14. An eyeglass lens with two permanent markings in the form of micro-engravings, a first reference point and a near reference point, wherein the first reference point is located midway between the permanent markings, wherein the eyeglass lens further comprises a nonpermanent stamped marking that identifies the near reference point, and the near reference point is offset relative to the first reference point by 16 mm downward and 2.5 mm nasally, wherein:
the astigmatism at the near reference point differs by at least 0.5 dpt from the astigmatism at the first reference point; and
the difference between the vertical prismatic power at the first reference point and the vertical prismatic power at the near reference point differs by at least 0.5 cm/m from a value *ΔPr₉₀,* and/or
the difference between the horizontal prismatic power at the first reference point and the horizontal prismatic power at the near reference point deviates by at least 0.5 cm/m from a value *ΔPr₀,* wherein: ${ΔPr}_{90} = 0 , 2 + 0 , 7008 {S}_{F} + 0 , 8992 {S}_{N} - 0 , 008 {S}_{N}^{2} ,$ and ${ΔPr}_{90} = - \frac{{S}_{F 0} + {S}_{N 0}}{8} ,$ and wherein:
*S_{F90}* denotes the refractive power in the vertical direction at the first reference point;
*S_{N90}* denotes the refractive power in the vertical direction at the near reference point;
*S_{F0}* denotes the refractive power in the horizontal direction at the first reference point;
*S_{N0}* denotes the refractive power in the horizontal direction at the near reference point;
and
wherein
the horizontal direction is defined by a straight line connecting the permanent markings, and
the vertical direction is perpendicular to the horizontal direction.

15. An eyeglass lens according to any one of claims 13 through 14, wherein the eyeglass lens is a single-vision lens or a progressive lens having a mean spherical power *S_{F}* at the first reference point, a mean spherical power *S_{N}* at the near reference point, and an addition *Add = S_{N} - S_{F},* where: $- 6 , 0 dpt \leq {S}_{F} \leq + 6 , 0 dpt and Add \leq 2 , 50 dpt .$

## Revendications

1. Procédé mis en œuvre par ordinateur pour le calcul ou l'optimisation d'un verre de lunettes en vue de la fabrication du verre de lunettes calculé ou optimisé, comprenant :
la saisie d'une puissance de référence et/ou d'un astigmatisme de référence en un point de référence de près du verre de lunettes,
la détermination d'une valeur de correction du prisme vertical et/ou horizontal au point de référence de près du verre de lunettes ;
la modification de la puissance de référence et/ou de l'astigmatisme de référence au point de référence de près à l'aide de la valeur de correction du prisme vertical et/ou horizontal du verre de lunettes ;
détermination d'une courbe continue de la puissance de référence et/ou de l'astigmatisme de référence le long d'une ligne principale (10) du verre de lunettes à partir de la puissance modifiée et/ou de l'astigmatisme de référence au point de référence de près ;
calculer ou optimiser le verre de lunettes à partir de la puissance de référence modifiée et/ou de l'astigmatisme de référence au point de référence de près et de la courbe déterminée de la puissance de référence et/ou de l'astigmatisme de référence le long de la ligne principale (10).

2. Procédé selon la revendication 1, dans lequel la modification des valeurs initiales de la puissance de référence et/ou de l'astigmatisme de référence au point de référence de près comprend les étapes suivantes :
le calcul d'une puissance supplémentaire et/ou d'un astigmatisme supplémentaire au point de référence de près du verre de lunettes à partir de la valeur de correction du prisme vertical et/ou horizontal au point de référence de près du verre de lunettes ; et
l'addition de la puissance supplémentaire et/ou de l'astigmatisme supplémentaire à la puissance de référence et/ou à l'astigmatisme de référence au point de référence de près.

3. Procédé selon la revendication 1 ou 2, dans lequel la détermination d'une valeur de correction du prisme vertical et/ou horizontal au point de référence de près du verre de lunettes comprend les étapes suivantes :
déterminer une compensation physiologiquement nécessaire d'une différence entre le prisme vertical au point de référence de près du verre de lunettes et le prisme vertical au point de référence de près d'un deuxième verre de lunettes, le deuxième verre de lunettes présentant un effet différent de celui du verre de lunettes.

4. Procédé selon l'une des revendications précédentes, dans lequel la modification de la puissance de référence et/ou de l'astigmatisme de référence au point de référence de près :
- en fonction de l'acuité visuelle ; et/ou
- en fonction des aberrations d'ordre supérieur ; et/ou
- en fonction de l'astigmatisme du porteur de lunettes ; et/ou
- en fonction de l'œil dominant.

5. Procédé selon l'une des revendications précédentes, comprenant en outre :
la détermination d'une courbe continue du prisme horizontal et/ou vertical le long de la ligne principale (10) du verre de lunettes, de telle sorte que la valeur du prisme horizontal et/ou vertical varie de manière continue d'une valeur prédéfinie à la valeur au point de référence de près,
le calcul ou l'optimisation du verre de lunettes s'effectue en outre sur la base de la courbe déterminée du prisme horizontal et/ou vertical le long de la ligne principale (10).

6. Procédé de calcul d'un verre de lunettes selon la revendication 5, dans lequel la détermination d'une courbe continue du prisme horizontal et/ou vertical comprend les étapes suivantes :
la détermination d'une surface de superposition ou d'une bande de surface de superposition comportant une ligne principale qui correspond à la ligne principale (10) du verre de lunettes, la surface de superposition ou la bande de superposition présentant la variation continue du prisme horizontal et/ou vertical le long de la ligne principale ; et
additionner les hauteurs des flèches de la surface de superposition et de la face avant ou arrière du verre de lunettes.

7. Procédé selon l'une des revendications précédentes, dans lequel le verre de lunettes est un verre progressif.

8. Procédé de calcul ou d'optimisation d'une paire de verres de lunettes destinée à corriger l'anisométropie d'un porteur de lunettes en vue de la fabrication de la paire de verres calculée ou optimisée, comprenant :
la saisie des valeurs de réfraction initiales de chacun des deux verres de la paire de verres, lesdites valeurs de réfraction initiales comprenant la puissance de réfraction de consigne et/ou l'astigmatisme de consigne dans un point de référence de loin et dans un point de référence de près ;
le calcul ou l'optimisation d'au moins l'un des deux verres de la paire de verres selon le procédé visé dans l'une des revendications 1 à 7, dans lequel
le prisme vertical et/ou horizontal au point de référence de près du verre à calculer ou à optimiser est déterminé en fonction de la différence entre les valeurs de réfraction initiales des deux verres de la paire.

9. Dispositif destiné à calculer ou à optimiser un verre de lunettes ou une paire de verres de lunettes en vue de la fabrication du verre de lunettes ou de la paire de verres de lunettes calculés ou optimisés, le dispositif comprenant :
des moyens de détection destinés à détecter une valeur de réfraction de consigne et/ou un astigmatisme de consigne au point de référence de près du verre de lunettes ou des verres de lunettes d'une paire de verres de lunettes, et
un dispositif de calcul conçu pour :
déterminer une valeur de correction du prisme vertical et/ou horizontal au point de référence de près du verre de lunettes ou d'au moins l'un des verres de lunettes de la paire de verres ;
de modifier la valeur de réfraction de consigne et/ou l'astigmatisme de consigne au point de référence de près du verre de lunettes ou dudit au moins un verre de lunettes ou de la paire de verres de lunettes à l'aide de la valeur de correction du prisme vertical et/ou horizontal déterminée précédemment ;
déterminer une variation continue de la puissance de référence et/ou de l'astigmatisme de référence le long d'une ligne principale (10) du verre de lunettes à partir de la puissance et/ou de l'astigmatisme de référence modifiés au point de référence de près ; et de calculer ou d'optimiser
au moins une surface du verre de lunettes ou dudit au moins un verre de lunettes de la paire de verres de lunettes à l'aide de la valeur de réfraction de consigne modifiée et/ou de l'astigmatisme de consigne au point de référence de près et de la variation déterminée de la valeur de réfraction de consigne et/ou de l'astigmatisme de consigne le long de la ligne principale (10).

10. Produit logiciel conçu pour, lorsqu'il est chargé et exécuté sur un ordinateur, mettre en œuvre un procédé de calcul ou d'optimisation d'un verre de lunettes en vue de la fabrication du verre de lunettes calculé et optimisé conformément à l'une des revendications 1 à 7, ou un procédé de calcul ou d'optimisation d'une paire de verres de lunettes en vue de la fabrication de la paire de verres de lunettes calculée et optimisée conformément à la revendication 8.

11. Procédé de fabrication d'un verre de lunettes ou d'une paire de verres de lunettes, comprenant :
le calcul ou l'optimisation d'un verre de lunettes selon le procédé de calcul ou d'optimisation d'un verre de lunettes selon l'une des revendications 1 à 7, ou le calcul ou l'optimisation d'une paire de verres de lunettes selon le procédé de calcul ou d'optimisation d'une paire de verres de lunettes selon la revendication 8;
la fabrication du verre de lunettes ou de la paire de verres de lunettes ainsi calculés ou optimisés.

12. Dispositif destiné à la fabrication d'un verre de lunettes ou d'une paire de verres de lunettes, comprenant :
un dispositif de calcul conçu pour calculer ou optimiser le verre de lunettes selon un procédé de calcul ou d'optimisation d'un verre de lunettes selon l'une des revendications 1 à 7, ou pour calculer ou optimiser la paire de verres de lunettes selon un procédé de calcul ou d'optimisation d'une paire de verres de lunettes selon la revendication 8;
des moyens d'usinage conçus pour réaliser l'usinage final du verre de lunettes ou de la paire de verres de lunettes.

13. Verre de lunettes comportant un premier point de référence, un point de référence de près et deux repères permanents sous forme de microgravures, le premier point de référence étant le point de référence de loin ou le point de centrage, le verre de lunettes comprenant en outre des repères estampés non permanents qui identifient respectivement le premier point de référence et le point de référence de près, et dans lequel :
l'astigmatisme au point de référence de près s'écarte d'au moins 0,5 dpt de l'astigmatisme au premier point de référence ; et
la différence entre l'effet prismatique vertical au premier point de référence et l'effet prismatique vertical au point de référence de près s'écarte d'au moins 0,5 cm/m d'une valeur *ΔPr₉₀,* et/ou
la différence entre l'effet prismatique horizontal au premier point de référence et l'effet prismatique horizontal au point de référence de près s'écarte d'au moins 0,5 cm/m d'une valeur *ΔPr₀,* où : $Δ {Pr}_{90} = - 0 , 1 \left(-2,5+0,05{S}_{N 90}^{2}+\left({S}_{F 90}+0,8{Add}_{90}\right)\left({y}_{BN}-{y}_{BF}\right)+0,025{Add}_{90}\left(\begin{matrix}{y}_{BN}^{2} - \\ {y}_{NF}^{2}\end{matrix}\right)\right) ;$ et $Δ {Pr}_{0} = 0 , 05 \left({S}_{F 0}+{S}_{N 0}\right) \left({x}_{BN}-{x}_{BF}\right) ,$ et où :
*x_{BF}* désigne la coordonnée horizontale du premier point de référence ;
*x_{BN}* désigne la coordonnée horizontale du point de référence de près ;
*y_{BF}* désigne la coordonnée verticale du premier point de référence ;
*y_{BN}* désigne la coordonnée verticale du point de référence de près;
*S_{F90}* désigne l'indice de réfraction dans la direction verticale au premier point de référence ;
*S_{N90}* désigne l'indice de réfraction dans la direction verticale au point de référence de près;
*Add₉₀* = *S_{N90} - S_{F90}* désigne l'addition verticale ;
*S_{F0}* désigne la puissance de réfraction dans la direction horizontale au premier point de référence ;
*S_{N0}* désigne la puissance de réfraction dans la direction horizontale au point de référence de près ; et
*Add₀ = S_{N0}* - *S_{F0}* désigne l'addition horizontale,
la direction horizontale étant définie par une droite reliant les repères permanents et la direction verticale étant perpendiculaire à la direction horizontale.

14. Verre de lunettes comportant deux repères permanents sous forme de microgravures, un premier point de référence et un point de référence de proximité, le premier point de référence étant situé à mi-chemin entre les repères permanents, le verre de lunettes comprenant en outre un repère estampé non permanent qui désigne le point de référence de proximité, et le point de référence de près est décalé de 16 mm vers le bas et de 2,5 mm vers le nez par rapport au premier point de référence, dans laquelle :
l'astigmatisme au point de référence de près s'écarte d'au moins 0,5 dpt de l'astigmatisme au premier point de référence ; et
la différence entre l'effet prismatique vertical au premier point de référence et l'effet prismatique vertical au point de référence de près s'écarte d'au moins 0,5 cm/m d'une valeur *ΔPr₉₀,* et/ou
la différence entre l'effet prismatique horizontal au premier point de référence et l'effet prismatique horizontal au point de référence de près s'écarte d'au moins 0,5 cm/m d'une valeur *ΔPr₀,* où : $Δ {Pr}_{90} = 0 , 2 + 0 , 7008 {S}_{F} + 0 , 8992 {S}_{N} - 0 , 008 {S}_{N}^{2} ,$ et $Δ {Pr}_{0} = - \frac{{S}_{F 0} + {S}_{N 0}}{8} ,$ et où :
*S_{F90}* désigne la puissance réfractive dans la direction verticale au premier point de référence ;
*S_{N90}* désigne la puissance réfractive dans la direction verticale au point de référence de près ;
*S_{F0}* désigne l'indice de réfraction dans la direction horizontale au premier point de référence ;
*S_{N0}* désigne l'indice de réfraction dans la direction horizontale au point de référence de près ; et
où
la direction horizontale est définie par une droite reliant les repères permanents et la direction verticale est perpendiculaire à la direction horizontale.

15. Verre de lunettes selon l'une des revendications 13 à 14, dans lequel le verre de lunettes est un verre unifocal ou un verre progressif, qui présente un effet sphérique moyen *S_{F}* au premier point de référence, un effet sphérique moyen *S_{N}* au point de référence de près et une addition *Add = S_{N} - S_{F},* où : $- 6 , 0 dpt \leq {S}_{F} \leq + 6 , 0 dpt et Add \leq 2 , 50 dpt .$
